(19) **Europäisches Patentamt / European Patent Office / Office européen des brevets**

(11) **EP 4 682 297 A1**

(12) **EUROPEAN PATENT APPLICATION**
published in accordance with Art. 153(4) EPC

(43) Date of publication:
**21.01.2026 Bulletin 2026/04**

(21) Application number: **24768897.1**

(22) Date of filing: **14.03.2024**

(51) International Patent Classification (IPC):
*C25B 13/07* (2021.01)  *C01G 25/02* (2006.01)
*C04B 35/50* (2006.01)  *C04B 35/488* (2006.01)
*C25B 1/042* (2021.01)  *C25B 9/00* (2021.01)
*C25B 9/23* (2021.01)  *C25B 13/04* (2021.01)
*H01M 8/12* (2016.01)  *H01M 8/1246* (2016.01)

(52) Cooperative Patent Classification (CPC):
**C01G 25/02; C04B 35/488; C04B 35/50;**
**C25B 1/042; C25B 9/00; C25B 9/23; C25B 13/04;**
**C25B 13/07; H01M 8/12; H01M 8/1246**

(86) International application number:
**PCT/JP2024/010102**

(87) International publication number:
**WO 2024/190886 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041188**

(71) Applicant: **National University Corporation Hokkaido University**
**Hokkaido 060-0808 (JP)**

(72) Inventors:
• **AOKI, Yoshitaka**
  **Sapporo-shi, Hokkaido 060-0808 (JP)**
• **TORIUMI, Hajime**
  **Sapporo-shi, Hokkaido 060-0808 (JP)**

(74) Representative: **J A Kemp LLP**
**80 Turnmill Street**
**London EC1M 5QU (GB)**

(54) **CERAMIC REVERSIBLE CELL, STEAM ELECTROLYSIS CELL COMPRISING SAME, FUEL CELL AND AMMONIA CO-ELECTROLYSIS CELL**

(57)    A ceramic reversible cell including any one or more selected from the group consisting of a perovskite-type metal oxide, a hydrate of the perovskite-type metal oxide and a hydride of the perovskite-type metal oxide, in which the any one or more selected from the group consisting of the perovskite-type metal oxide, the hydrate of the perovskite-type metal oxide, and the hydride of the perovskite-type metal oxide include A (A being any one or more selected from the group consisting of Ba, Sr and Ca), B (B being any one or more selected from the group consisting of Zr, Sn, Ce, Ti and Hf), and M (M being any one or more selected from the group consisting of In, Fe, Cr and Mn) as main metal atoms, and satisfy the predetermined formula and include hydride ions when brought into an equilibrium state by contact with dry hydrogen having a water content of 20 ppm or less in a volume ratio at 500°C to 900°C.

[FIG. 3A]

**Description**

TECHNICAL FIELD

The present disclosure relates to a ceramic reversible cell, and a steam electrolysis cell, a fuel cell and an ammonia-producing co-electrolysis cell each including the same.

BACKGROUND ART

Electrochemical cells including a ceramic electrolyte layer (hereinafter referred to as "ceramic reversible cells"), for example when used as steam electrolysis cells, are one of the efficient devices for producing hydrogen from renewable power. In addition, ceramic reversible cells are also useful as fuel cells or ammonia-producing co-electrolysis cells.
Patent Document 1 describes an ion conductor that is a perovskite type oxide substantially composed of Ba, Zr, Ce and O and in which only protons conduct substantially, and a ceramic reversible cell using the ion conductor. Non-Patent Document 1 describes a ceramic reversible cell using a proton conductor.

CONVENTIONAL ART DOCUMENT

PATENT DOCUMENT

Patent Document 1: JP 2001-307546 A

NON-PATENT DOCUMENT

Non-Patent Document 1: "Steam electrolysis by solid oxide electrolysis cells (SOECs) with proton-conducting oxides", Chem. Soc. Rev., 2014, 43, 8255-8270

SUMMARY OF THE INVENTION

PROBLEMS TO BE SOLVED BY THE INVENTION

However, the ceramic reversible cell as described in Patent Document 1 and the like does not have sufficient properties, and requires further improvement.
The present disclosure has been made in view of such circumstances, and an object thereof is to provide a ceramic reversible cell capable of exhibiting more favorable properties (for example, as a steam electrolysis cell, an electrolysis current density at 600°C and 1.3 V is high, as a fuel cell, an output at 600°C is high, and as an ammonia-producing co-electrolysis cell, a Faradaic efficiency of ammonia at 600°C is 0.1% or more, etc.) than the conventional art, and a steam electrolysis cell, a fuel cell and an ammonia-producing co-electrolysis cell each including the same.

MEANS FOR SOLVING THE PROBLEMS

A first aspect of the present invention is
a ceramic reversible cell including any one or more selected from the group consisting of a perovskite-type metal oxide, a hydrate of the perovskite-type metal oxide and a hydride of the perovskite-type metal oxide, in which the any one or more selected from the group consisting of the perovskite-type metal oxide, the hydrate of the perovskite-type metal oxide, and the hydride of the perovskite-type metal oxide:

include A (A being any one or more selected from the group consisting of Ba, Sr and Ca), B (B being any one or more selected from the group consisting of Zr, Sn, Ce, Ti and Hf), and M (M being any one or more selected from the group consisting of In, Fe, Cr and Mn) as main metal atoms, and
satisfy the following formula (1) and include hydride ions when brought into an equilibrium state by contact with dry hydrogen having a water content of 20 ppm or less in a volume ratio at 500°C to 900°C.

$$[A] : [B] : [M] = 1 : a (1 - x) : ax \cdots (1)$$

In the formula (1), [A], [B] and [M] respectively represent contents of A, B and M in mol%, and relationships of $0.90 \leq a \leq 1.10$ and $0.3 \leq x < 1.0$ are satisfied.

A second aspect of the present invention is
the ceramic reversible cell according to the first aspect, in which any one or more selected from the group consisting of the perovskite-type metal oxide, the hydrate of the perovskite-type metal oxide, and the hydride of the perovskite-type metal oxide has a layer including hydride ions in a region on the fuel electrode side and does not have the layer including hydride ions in a region on the air electrode side with respect to the layer including hydride ions.

A third aspect of the present invention is
the ceramic reversible cell according to the first or second aspect, in which any one or more selected from the group consisting of the perovskite-type metal oxide, the hydrate of the perovskite-type metal oxide and the hydride of the perovskite-type metal oxide further satisfies the following formula (3) when brought into an equilibrium state by contact with dry hydrogen having a water content of 20 ppm or less in a volume ratio at 500°C to 900°C.

$$1.5 < [O]/[A] \leq 2.30 \cdots \ (3)$$

In the formula (3), [O] represents a content in mol% of oxygen atoms present at the oxygen position of the perovskite structure obtained from the Rietveld analysis result of the neutron diffraction pattern.

A fourth aspect of the present invention is
the ceramic reversible cell according to any one of the first to third aspects, including:

a first layer including at least one selected from the group consisting of the perovskite-type metal oxide, a hydrate of the perovskite-type metal oxide, and a hydride of the perovskite-type metal oxide; and
a second layer including at least one selected from the group consisting of the perovskite-type metal oxide, the hydrate of the perovskite-type metal oxide, and the hydride of the perovskite-type metal oxide, and including at least one selected from the group consisting of Ni, Fe, Co, Pd, Cu and Ru.

A fifth aspect of the present invention is
the ceramic reversible cell according to the fourth aspect, having the second layer, the first layer and a third layer including a conductive oxide in this order.

Sixth aspect of the present invention provides a steam electrolysis cell including the ceramic reversible cell according to any one of the first to fifth aspects.

Seventh aspect of the present invention provides a fuel cell including the ceramic reversible cell according to any one of the first to fifth aspects.

Eighth aspect of the present invention is an ammonia-producing co-electrolysis cell including the ceramic reversible cell according to any one of the first to fifth aspects.

TECHNICAL EFFECTS OF THE INVENTION

Embodiments of the present invention can provide a ceramic reversible cell capable of exhibiting more favorable properties than the conventional art, and a steam electrolysis cell, a fuel cell and an ammonia-producing co-electrolysis cell each including the same.

BRIEF DESCRIPTION OF THE DRAWINGS

[Fig. 1A] Fig. 1A shows a schematic view of each defect concentration of a conventional proton conducting perovskite-type oxide or the like when $p_{H2O}$ is relatively high.
[Fig. 1B] Fig. 1B shows a schematic view of each defect concentration of a conventional proton conducting perovskite-type oxide or the like when $p_{H2O}$ is an approximately intermediate value between Fig. 1A and Fig. 1C.
[Fig. 1C] Fig. 1C shows a schematic view of each defect concentration of a conventional proton conducting perovskite-type oxide or the like when $p_{H2O}$ is relatively low.
[Fig. 2A] Fig. 2A shows a schematic view of a steam electrolysis cell having a conventional proton conducting perovskite-type oxide or the like, and a schematic view of distributions (dashed lines) of $p_{H2}$ and $p_{H2O}$ in the electrolyte.
[Fig. 2B] Fig. 2B shows a schematic view of each defect concentration in the vicinity of the air-side electrode of a conventional steam electrolysis cell having a proton-conducting perovskite-type metal oxide or the like.
[Fig. 2C] Fig. 2C shows a schematic view of each defect concentration in the vicinity of the fuel electrode of a conventional steam electrolysis cell having a proton-conducting perovskite-type metal oxide or the like.
[Fig. 3A] Fig. 3A shows a schematic view of a steam electrolysis cell including a perovskite-type metal oxide or the like according to embodiments of the present invention, and a schematic view of distributions (dashed lines) of $p_{H2}$ and $p_{H2O}$ in the perovskite-type metal oxide.

[Fig. 3B] Fig. 3B shows a schematic view of each defect concentration in the vicinity of the air electrode of the steam electrolysis cell including the perovskite-type metal oxide or the like according to the embodiments of the present invention.

[Fig. 3C] Fig. 3C shows a schematic view of each defect concentration in the vicinity of the fuel electrode of the steam electrolysis cell including the perovskite-type metal oxide or the like according to the embodiments of the present invention.

[Fig. 3D] Fig. 3D shows a schematic view of each defect concentration inside the perovskite-type metal oxide bulk of the steam electrolysis cell including the perovskite-type metal oxide or the like according to the embodiments of the present invention.

[Fig. 4A] Fig. 4A shows an NRD pattern and Rietveld calculated profile of Sample 1 (corresponding to $HBZI_{55}$ in the ceramic reversible cell of the Example).

[Fig. 4B] Fig. 4B shows an NRD pattern and Rietveld calculated profile of Sample 2 (corresponding to $BZI_{55}$ in the ceramic reversible cell of the Comparative Example).

[Fig. 4C] Fig. 4C shows the NRD pattern and Rietveld calculated profile of Sample 3.

[Fig. 4D] Fig. 4D shows the NRD pattern and Rietveld calculated profile of Sample 4.

[Fig. 4E] Fig. 4E shows the NRD pattern and Rietveld calculated profile of Sample 5.

[Fig. 4F] Fig. 4F shows the NRD pattern and Rietveld calculated profile of Sample 6.

[Fig. 5] Fig. 5 shows the relationship between the hydrogen partial pressure and the hydrogen absorption amount at each temperature for Sample 1' (corresponding to $HBZI_{55}$ in the ceramic reversible cell of the Example).

[Fig. 6A] Fig. 6A shows a current-voltage (I-V) curve in water electrolysis of a cell of the Comparative Example.

[Fig. 6B] Fig. 6B shows a current-voltage (I-V) curve in water electrolysis of a cell of the Example.

[Fig. 6C] Fig. 6C shows an AC impedance spectrum of a cell of the Comparative Example.

[Fig. 6D] Fig. 6D shows an AC impedance spectrum of a cell of the Example.

[Fig. 7A] Fig. 7A shows a cell voltage, a hydrogen generation rate ($v_{meas}$), and a Faradaic efficiency ($\eta$) when constant current steam electrolysis was performed for 4 hours using a cell of the Comparative Example.

[Fig. 7B] Fig. 7B shows a cell voltage, a hydrogen generation rate ($v_{meas}$), and a Faradaic efficiency ($\eta$) when constant current steam electrolysis was performed for 4 hours using a cell of the Example.

[Fig. 8A] Fig. 8A shows a voltage (solid line, vertical left axis) and an output curve (dashed line, vertical right axis) with respect to a current (horizontal axis) of a cell (fuel cell) of the Comparative Example.

[Fig. 8B] Fig. 8B shows a voltage (solid line, vertical left axis) and an output curve (dashed line, vertical right axis) with respect to a current (horizontal axis) of a cell (fuel cell) of the Example.

[Fig. 8C] Fig. 8C shows an AC impedance spectrum of a cell (fuel cell) of the Comparative Example.

[Fig. 8D] Fig. 8D shows an AC impedance spectrum of a cell (fuel cell) of the Example.

[Fig. 9A] Fig. 9A shows a cross-sectional SEM image of a cell of the Comparative Example after steam electrolysis.

[Fig. 9B] Fig. 9B shows a cross-sectional SEM image of a cell of the Example after steam electrolysis.

[Fig. 9C] Fig. 9C shows a cross-sectional SEM image (enlarged image between the first layer 102 and the third layer 104) of a cell of the Example after steam electrolysis.

[Fig. 9D] Fig. 9D shows a surface SEM image of the first layer 102 of the cell of the Example after steam electrolysis.

[Fig. 10A] Fig. 10A shows the result (voltage change) of $N_2$-$H_2O$ co-electrolysis of a cell of the Example.

[Fig. 10B] Fig. 10B shows the result (signal intensity changes of $H_2$, $N_2$, and $NH_3$ in MASS spectrum) of $N_2$-$H_2O$ co-electrolysis of a cell of the Example.

[Fig. 11A] Fig. 11A shows an optical microscope image of a side surface of a cell of Sample No. 14.

[Fig. 11B] Fig. 11B shows an optical microscope image of a side surface of a cell of Sample No. 13.

[Fig. 11C] Fig. 11C shows an optical microscope image of a side surface of a cell of Sample No. 12.

[Fig. 11D] Fig. 11D shows an optical microscope image of a side surface of a cell of Sample No. 11.

[Fig. 12] Fig. 12 shows electric field current-voltage curves of cells of Sample Nos. 11 to 14.

[Fig. 13A] Fig. 13A shows a cell voltage (V), a hydrogen generation rate ($V_{H2}$), and Faradaic efficiency of a cell of Sample No. 14 when constant current electrolysis is performed.

[Fig. 13B] Fig. 13B shows a cell voltage (V), a hydrogen generation rate ($V_{H2}$), and Faradaic efficiency of a cell of Sample No. 12 when constant current electrolysis is performed.

[Fig. 14] Fig. 14 shows AC impedance spectrums of cells of Sample Nos. 11 to 14.

[Fig. 15] Fig. 15 shows a $\mu$XAFS measurement result of a cell of Sample No. 12.

[Fig. 16] Fig. 16 shows a $\mu$XAFS measurement result of a cell of Sample No. 12.

[Fig. 17] Fig. 17 shows an NRD pattern and a Rietveld calculated profile of a blackened layer of Sample No. 12.

MODE FOR CARRYING OUT THE INVENTION

The present inventors have studied from various angles in order to achieve a ceramic reversible cell capable of exhibiting more favorable properties than the conventional art. As a result, it has been found that a ceramic reversible cell capable of exhibiting more favorable properties (for example, as a steam electrolysis cell, an electrolysis current density at 600°C and 1.3 V is high, as a fuel cell, an output at 600°C is high, and as an ammonia-producing co-electrolysis cell, a Faradaic efficiency of ammonia at 600°C is 0.1% or more, etc.) than the conventional art can be obtained by providing a feature of including a predetermined metal oxide having a perovskite structure and/or a hydrate thereof and/or a hydride thereof, and including a hydride ion (H⁻) when the metal oxide or the like is brought into contact with dry hydrogen at a high temperature (for example, it is confirmed by having a hydrogen atom present at one or more positions selected from the group consisting of an oxygen position (oxygen site) and a [100] plane center position of the perovskite structure). This is explained from the fact that while the hydrogen atoms present at the positions are known to be hydride ions (H⁻), the metal oxide or the like originally has proton conductivity, and in addition, in a portion in contact with dry hydrogen at a high temperature, H⁻ is introduced to have H⁻ conductivity, thereby allowing hole or electron leakage to be suppressed, exhibiting more favorable properties than the conventional art. A mechanism capable of suppressing hole or electron leakage is considered as follows.

In general, in a proton conducting metal oxide and/or a hydrate thereof and/or a hydrate thereof (hereinafter, may be referred to as a "metal oxide or the like") as described in Patent Document 1, the defect equilibrium of the following formulas (F1) to (F4) is established under an atmosphere of $H_2$-$H_2O$.

[Mathematical Formula 1]

$$H_2(g) + O_O^\times \rightleftharpoons V_O^{\bullet\bullet} + 2e' + H_2O(g) \qquad K_1 = \frac{[V_O^{\bullet\bullet}][e']^2 p_{H2O}}{[O_O^\times] p_{H2}} \qquad (F1)$$

$$\tfrac{1}{2}H_2(g) + V_O^{\bullet\bullet} + e' \rightleftharpoons H_O^\bullet \qquad K_2 = \frac{[H_O^\bullet]}{[V_O^{\bullet\bullet}][e'] p_{H2}^{0.5}} \qquad (F2)$$

$$\tfrac{1}{2}H_2(g) + e' \rightleftharpoons H_i' \qquad K_3 = \frac{[H_O']}{[e'] p_{H2}^{0.5}} \qquad (F3)$$

$$H_2O(g) + V_O^{\bullet\bullet} + O_O^\times \rightleftharpoons 2OH_O^\bullet \qquad K_4 = \frac{[OH_O^\bullet]^2}{[V_O^{\bullet\bullet}][O_O^\times] p_{H2O}} \qquad (F4)$$

The above defect equilibrium formulas are described by Kröger-Vink notation, and $O_O^\times$, $V_O^{\bullet\bullet}$, $e'$, $H_O^\bullet$, $H_i'$, and $OH_O^\bullet$ represent lattice oxygen, oxygen vacancy, electron defect (electron), H⁻ ion defect occupying oxygen position (oxygen site), H⁻ ion at interstitial site, and H⁺ defect bound to lattice oxygen, respectively.

For the proton conducting oxide $AB_{1-x}M_xO_{3-x/2}$ or the like, which is an $ABO_3$ perovskite-type metal oxide (A: $Ba^{2+}$ or the like, B: $Zr^{4+}$ or the like) or the like as described in Patent Document 1 and in which a part of the tetravalent cation B at the B site is substituted with a trivalent acceptor cation M ($In^{3+}$ or the like), when the defect equilibrium of the above formulas (F1) to (F4) is established, the following formula (F5) is established from the electrical neutrality condition regarding the defect.

[Mathematical Formula 2]

$$[OH_O^\bullet] + 2[V_O^{\bullet\bullet}] + [H_O^\bullet] = [M_B'] + [e'] + [H_i'] \qquad (F5)$$

Herein, $M_B'$ represents the $M^{3+}$ cation introduced into the B site, and [ ] represents the mole fraction of each defective species. In a region of sufficiently large $[M_B']$, the above formula (F5) can be approximated as the following formula (F6).

$$2[V_O^{\bullet\bullet}] \approx [M_B'] = x \qquad (F6)$$

Combining the above formulas (F1) and (F6) provides:

$$[e'] = \{K_1 [O_O^X] p_{H2} [V_O^{**}]^{-1} p_{H2O}^{-1}\}^{0.5} \qquad \text{(F7)}$$

That is, the electron defect concentration [e'] is proportional to $p_{H2}/p_{H2O}$ to the power of 0.5.

[Mathematical Formula 3]

Then, approximating $[O_O^X] \approx a$ (constant) and combining the above formulas (F4) and (F6) provide:

$$[OH_O^*] = \{K_4 [V_O^{**}][O_O^X] p_{H2O}\}^{0.5} = \{\tfrac{1}{2} K_4 x a p_{H2O}\}^{0.5} \qquad \text{(F8)}$$

That is, the proton defect concentration $[OH_O^*]$ is proportional to the 0.5 power of $p_{H2O}$. In other words, when the $p_{H2O}$ is constant, the proton defect concentration is almost constant. Similarly, relations of $H_O^* \propto p_{H2}$ and $H_i' \propto p_{H2}$ are obtained respectively from the above formulas (F2) and (F7) and the above formulas (F3) and (F7).

[Mathematical Formula 4]

Further, in the semiconductor, the equilibrium between the electron defect and the hole defect (h*) of the following formula (F9) is established.

$$e' + h^* = null \qquad\qquad [e'][h^*] = K_i \qquad \text{(F9)}$$

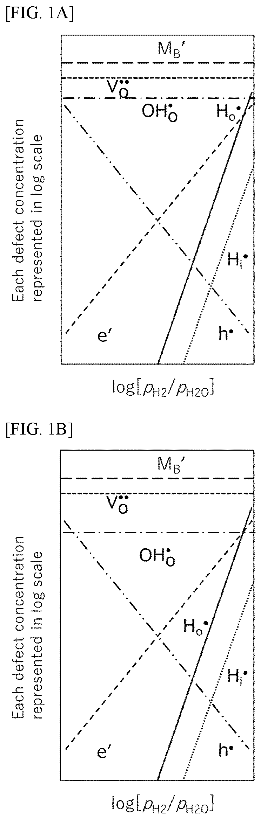

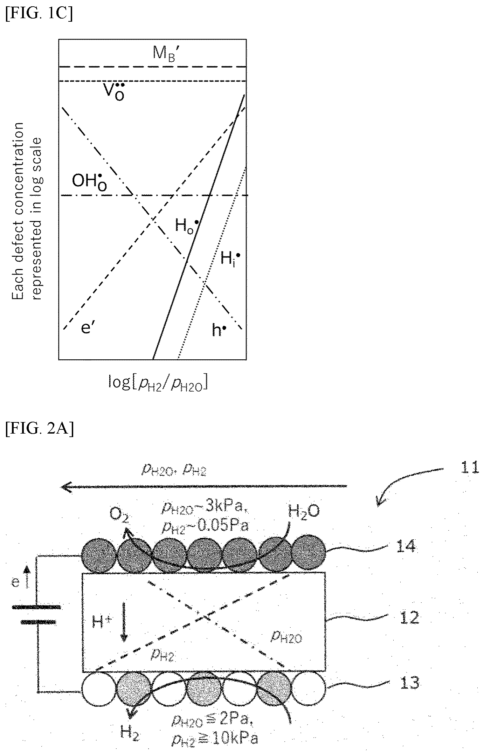

Figs. 1A to 1C show, in logarithmic representation, the respective defect concentrations of the conventional proton-conducting perovskite-type metal oxide $AB_{1-x}M_xO_{3-x/2}$ and the like as described in Patent Document 1 as a function of $P_{H2}/P_{H2O}$. Fig. 1A shows the respective defect concentrations when $p_{H2O}$ is relatively high, Fig. 1C shows the respective defect concentrations when $p_{H2O}$ is relatively low, and Fig. 1B shows the respective defect concentrations when $p_{H2O}$ is approximately intermediate between Figs. 1A and 1C. The following can be seen from Figs. 1A to 1C.

[Mathematical Formula 5]

According to the magnitude of $p_{H2O}$, mainly only the proton defect concentration $[OH_O^*]$ changes according to the above formula (F8). The electron defect concentration [e'] increases in proportion to $p_{H2}^{0.5}$ when $p_{H2O}$ is constant according to the above formula (F7). In contrast, from the relationship of the above formula (F9), the hole defect concentration [$h^*$] increases in proportion to $p_{H2}^{-0.5}$ when $p_{H2O}$ is constant. In addition, as described above, the H- ion defect varies in relation to $H_O^* \propto p_{H2}^{0.5}$ and $H_i' \propto p_{H2}^{0.5}$.

[Mathematical Formula 6]

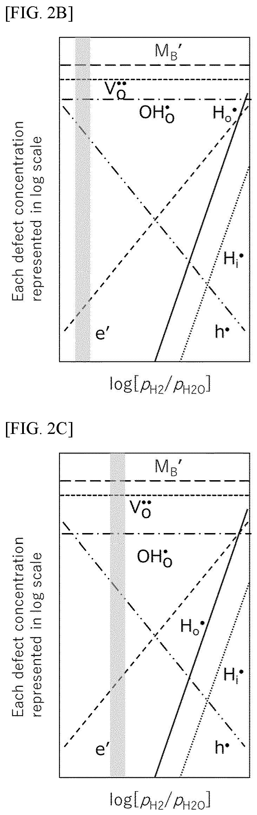

Fig. 2A shows, for example, a schematic view of a steam electrolysis cell 11 having a conventional proton-conducting perovskite-type metal oxide or the like (for example, $BaZr_{1-x-y}Ce_xM_yO_{3-y/2}$ (M = Y, Sc, Ln, and the like) or the like) and distribution (dashed line) of $p_{H2}$ and $p_{H2O}$ in the electrolyte, Fig. 2B shows respective defect concentrations in the vicinity of the air electrode of the steam electrolysis cell, and Fig. 2C shows respective defect concentrations in the vicinity of the fuel electrode of the steam electrolysis cell. When the fuel electrode side undergoes a hydrogen atmosphere (for example, $p_{H2O} \leq 2$ Pa and $p_{H2} \geq 10$ kPa) and the air electrode side undergoes humidified air (for example, $p_{H2O} \approx 3$ kPa and $p_{H2} \approx 0.05$ Pa), as shown in Fig. 2A, $p_{H2O}$ decreases from the air electrode 14 toward the fuel electrode 13, and in contrast, $p_{H2}$ decreases from the fuel electrode 13 toward the air electrode 14. It is known that a proton-conducting perovskite-type metal oxide or the like (for example, $BaZr_{1-x-y}Ce_xM_yO_{3-y/2}$ (M = Y, Sc, Ln, and the like) or the like) included in the conventional electrolyte layer 12 does not generate H- ion defects and in contrast, generates proton defects $[OH_O^*]$ at a high temperature (for example, 600°C) in an atmosphere of $p_{H2O} \approx 1$ Pa and $p_{H2} \approx 100$ kPa thermodynamically. Therefore, the respective defect concentrations in the vicinity of the air electrode 14 and the fuel electrode 13 are considered to become hatched portions in Figs. 2B and 2C. That is, in the vicinity of the fuel electrode 13 in Fig. 2C, proton defects and hole defects are dominant over H⁻ion defects and electron defects. Therefore, when a + potential is applied to the air electrode 14 side in the electrolyte layer 12, the holes move toward the fuel electrode 13, leading to leakage current, and failing to provide favorable properties.

[Mathematical Formula 7]

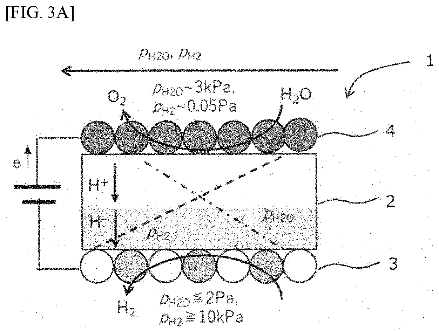

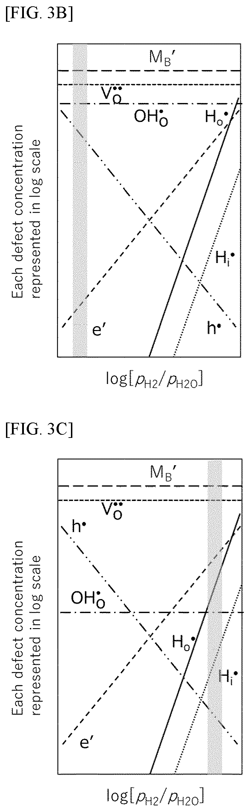

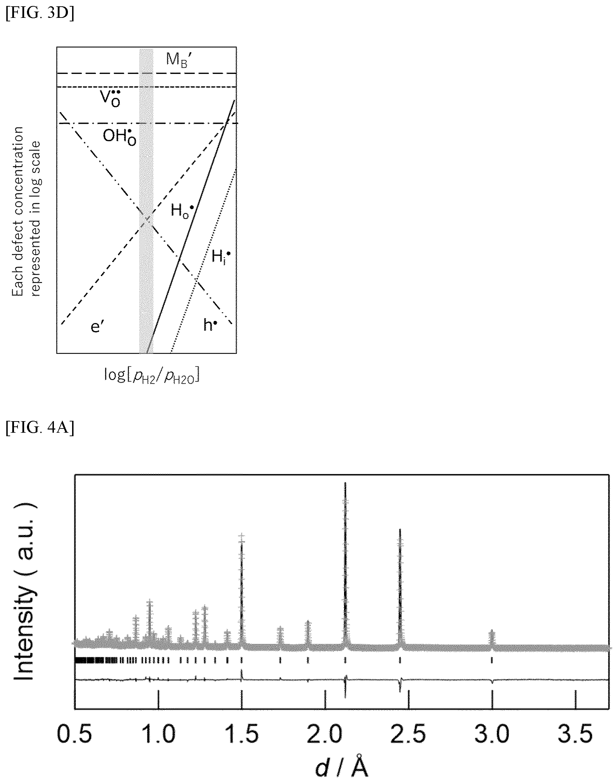

Fig. 3A shows a schematic view of a steam electrolysis cell 1 including a perovskite-type metal oxide or the like according to embodiments of the present invention, and a distribution (dashed line) of $p_{H2}$ and $p_{H2O}$ in the perovskite-type metal oxide, Fig. 3B shows respective defect concentrations in the vicinity of the air electrode of the steam electrolysis cell, Fig. 3C shows respective defect concentrations in the vicinity of the fuel electrode of the steam electrolysis cell, and Fig. 3D shows respective defect concentrations in the perovskite-type metal oxide bulk. The steam electrolysis cell 1 of Fig. 3A includes a layer 2 including a predetermined perovskite-type metal oxide or the like, a fuel electrode 3, and an air electrode 4. Proton defects and hole defects may be predominant over H⁻ ion defects and electron defects in the vicinity of the air electrode 4 shown in Fig. 3B, but H⁻ ion defects and electron defects are predominantly generated in the vicinity of the fuel electrode 3 shown in Fig. 3C. Therefore, as shown in Fig. 3D, somewhere inside the layer 2 including the perovskite-type metal oxide or the like, there is a region (hatched portion) where $p_{H2O}$ and $p_{H2}$ have appropriate values and e' and $h^*$ are present to the same extent, that is, a region where the sum of concentrations of e' and $h^*$ is minimum. As a result, it is considered that hole or electron leakage is suppressed and high efficiency can be obtained. It is considered that hole or electron leakage is similarly suppressed in a fuel cell, and favorable properties are obtained.

The above mechanism does not limit the scope of the embodiments of the present invention.

Hereinafter, each requirement defined by the embodiments of the present invention will be described in detail.

The ceramic reversible cell according to the embodiments of the present invention is

A ceramic reversible cell comprising any one or more selected from the group consisting of a perovskite-type metal oxide, a hydrate of the perovskite-type metal oxide and a hydride of the perovskite-type metal oxide, in which the any one or more selected from the group consisting of the perovskite-type metal oxide, the hydrate of the perovskite-type metal oxide and the hydride of the perovskite-type metal oxide:

include A (A being any one or more selected from the group consisting of Ba, Sr and Ca), B (B being any one or more selected from the group consisting of Zr, Sn, Ce, Ti and Hf) and M (M being any one or more selected from the group consisting of In, Fe, Cr and Mn) as main metal atoms, and
satisfy following formula (1) and include hydride ions when brought into an equilibrium state by contact with dry hydrogen having a water content of 20 ppm or less in a volume ratio at 500°C to 900°C,

$$[A] : [B] : [M] = 1 : a\,(1 - x) : ax \cdots (1)$$

wherein [A], [B] and [M] respectively represent contents of A, B and M in mol%, and relationships of $0.90 \leq a \leq 1.10$ and $0.3 \leq x < 1.0$ are satisfied.

As described above, provided is a ceramic reversible cell capable of exhibiting more favorable properties (for example, as a steam electrolysis cell, an electrolysis current density at 600°C and 1.3 V is high, as a fuel cell, an output at 600°C is high, and as an ammonia-producing co-electrolysis cell, a Faradaic efficiency of ammonia at 600°C is 0.1% or more) than the conventional art. As described above, one factor is considered to be the fact that the leakage current can be suppressed as compared with the conventional art. The Faradaic efficiency of ammonia at 600°C is preferably 1% or more, more preferably 5% or more.

The metal oxide may be described as "$AB_{a(1-x)} M_{ax}O_{3-\delta}$".

The ceramic reversible cell according to the embodiments of the present invention includes a metal oxide having a perovskite structure that can be represented by the general formula $ABO_3$ and/or a hydrate thereof and/or a hydride thereof. Examples of the perovskite structure include a cubic crystal, a hexagonal crystal, an orthorhombic crystal, a monoclinic crystal, and a tetragonal crystal, and although not particularly limited, a cubic perovskite may be stable, and is preferable. Whether or not these perovskite structures are included can be confirmed by acquiring an electron beam diffraction pattern using a field emission transmission electron microscope (FE-TEM).

The perovskite-type metal oxide or the like includes the A, B and M as main metal atoms, and may satisfy, for example, the following formula (4).

$$([A] + [B] + [M])/[X] \geq 0.75 \cdots (4)$$

In the formula (4), X represents all elements except for oxygen and hydrogen, and [A], [B], [M] and [X] each represent the contents of A, B, M and X in mol%. The left side of the formula (4) increases, for example, when the amount of impurity elements is small. From the viewpoint of reducing impurities, the left side of the formula (4) is preferably 0.90 or more, more preferably 0.95 or more. In addition, the following formula (5) is preferably satisfied.

$$([A] + [B] + [M])/[X^2] \geq 0.50 \cdots (5)$$

Herein, $X^2$ represents all elements except for oxygen.

The left side of the formula (5) also increases, for example, when the amount of impurity elements is small. From the viewpoint of reducing impurities, the left side of the formula (5) is more preferably 0.55 or more.

In the formula (1), A may be a divalent cation, B may be a tetravalent cation, and M may be a cation having a valence of three or less, and replacing a part of B with M generates oxygen deficiency, which may develop proton conductivity. From the viewpoint that H⁻ is easily introduced (that is, the formula (2) is easily satisfied), A is any one or more selected from the group consisting of Ba, Sr and Ca, and B is any one or more selected from the group consisting of Zr, Sn, Ce, Ti and Hf. From the viewpoint of easily maintaining the cubic perovskite structure, A is preferably one or more selected from the group consisting of Ba and Sr. M is any one or more selected from the group consisting of In, Fe, Cr and Mn from the viewpoint that H⁻ is easily introduced and from the viewpoint of having corrosion resistance by dry hydrogen treatment described later. Further, in order to introduce H⁻, oxygen deficiency may be required to some extent, and the substitution amount x of B by M is 0.3 or more, preferably 0.4 or more. In contrast, from the viewpoint of the structural stability of the perovskite-type metal oxide, x is less than 1, preferably 0.8 or less.

In the embodiments of the present invention, whether or not formula (1) is satisfied can be examined by, for example, general composition analysis (FE-TEM/EDS and the like). Elements (for example, impurities) other than the elements specified above can also be detected in the composition analysis, but it is sufficient that the formula (1) is satisfied. In addition, a measurement error may occur in the composition analysis, but the value a is set in consideration of the measurement error, and it is sufficient that $0.90 \leq a \leq 1.10$.

The perovskite-type metal oxide or the like included in the ceramic reversible cell according to the embodiments of the present invention may exhibit proton conductivity under a normal environment, but when dry hydrogen having a water content of 20 ppm or less in terms of volume ratio is brought into contact with the perovskite-type metal oxide or the like at 500°C to 900°C to lead an equilibrium state (that is, the composition change becomes constant), hydride ions (H⁻) are introduced and H⁻ is included, thereby providing H⁻ conductivity. Whether or not hydride ions (H⁻) are included can be confirmed by examining whether or not any one or more selected from the group consisting of the following (a) to (c) is satisfied.

(a) The following formula (2) is satisfied.

$$[H^-]/[A] \geq 0.05 \cdots (2)$$

(In the formula (2), H⁻ represents a hydrogen atom present at any one or more positions selected from the group consisting of an oxygen position and a [100] plane center position of a perovskite structure obtained from a Rietveld analysis result of a neutron diffraction pattern, and [A] and [H⁻] represent contents of A and H⁻ in mol%, respectively)

(b) Blackening (darkening) occurs compared with the portion not in contact with the dry hydrogen.

(c) The position at which the normalized absorbance equals 0.5 in the $\mu$XAFS spectrum measured by the synchrotron X-ray microprobe is shifted to the lower-energy side by 0.2 eV or more compared with the portion not in contact with the dry hydrogen.

In the formula (2) of the requirement (a), H⁻ may be, for example, a protium atom or a deuterium atom, both of which are present at a predetermined position. In the present specification, when the left side of the formula (2) is 0.05 or more, it can be determined that H⁻ is introduced (or H⁻ is included). The left side of the formula (2) is preferably 0.15 or more, and more preferably 0.30 or more. When the left side of the formula (2) is less than 0.05, H⁻ is not considered to be introduced (or included) because it is considered that the amount of H⁻ is small and sufficient H⁻ conductivity is not exhibited. A portion not in contact with the dry hydrogen does not satisfy the formula (2) and may maintain proton conductivity. In the portion not in contact with the dry hydrogen, the left side of the formula (2) is less than 0.05, preferably 0.03 or less, more preferably 0.01 or less, and most preferably 0.00.

For the requirement (b), the portion in contact with the dry hydrogen (that is, a portion or layer including H⁻) is blackened (darkened) as oxygen is further lost and H⁻ is introduced. Therefore, from the fact that the portion in contact with the dry hydrogen is blackened as compared with the portion not in contact with the dry hydrogen, it can be determined that the portion in contact with the dry hydrogen has introduced H⁻ (that is, H⁻ is included).

For the requirement (c), in the portion in contact with the dry hydrogen (that is, a portion or layer including H⁻), the oxygen is further lost and H- is introduced, whereby the μXAFS spectrum measured by the synchrotron X-ray microprobe is shifted to the lower-energy side, specifically, the position where the normalized absorbance equals 0.5 is shifted to the lower-energy side by 0.2 eV or more. Therefore, from the fact that the position of the portion in contact with the dry hydrogen is shifted to the lower-energy side by 0.2 eV or more as compared with the portion not in contact with the dry hydrogen, it can be determined that H- is introduced (that is, H- is included) into the portion in contact with the dry hydrogen.

The dry hydrogen to be in contact may have a moisture amount within the above range, a mixed gas ($H_2$/Ar) of $H_2$ and an inert gas such as Ar may be used, and the hydrogen concentration thereof may be 10 vol% or more. The hydrogen may be, for example, protium or deuterium. The moisture specified by the "moisture amount" may be, for example, light water or heavy water ($D_2O$). When the temperature range and the moisture amount are not satisfied, the perovskite-type metal oxide or the like satisfying the above formula (1) cannot sufficiently introduce H-, and any one or more selected from the group consisting of the above (a) to (c) may not be satisfied. In order to lead to equilibrium state by being in contact with the dry hydrogen, the contact time may be made sufficiently long, and for example, the contact for 10 hours or more can be regarded as achieving equilibrium state.

Bringing the dry hydrogen into contact causes the perovskite-type metal oxide or the like included in the ceramic reversible cell according to the embodiments of the present invention to have a portion (or layer) including hydride ions. The side brought into contact with the dry hydrogen has hydride ion conductivity, and can be used as a fuel electrode and/or an electrolyte layer in a region on the fuel electrode side. The side not brought into contact with the dry hydrogen maintains original proton conductivity, and can be used as an air electrode and/or an electrolyte layer in a region on the air electrode side. In a ceramic reversible cell according to preferred embodiments of the present invention, the perovskite-type metal oxide or the like has a layer including hydride ions (hereinafter, also referred to as a "hydride ion (H-) conductive layer") in a region on one side (fuel electrode side) in the thickness direction of the cell, and does not have a layer including hydride ions in a region on the other side (air electrode side) with respect to the layer including hydride ions (that is, the other side is hereinafter also referred to as a "proton (H+) conductive layer" because it maintains proton conductivity). Such a ceramic reversible cell is also referred to as a bipolar conductive cell because of having an H- conductive layer and an H+ conductive layer. In this specification, the "H- conductive layer" is a layer satisfying any one or more selected from the group consisting of the above (a) to (c). In this specification, the "H- conductive layer" may be a layer satisfying the above formula (2) in the above (a), may be a layer blackened (darkened) as compared with the H+ conductive layer in the above (b), and may be a layer in which the position at which the normalized absorbance of the μXAFS spectrum measured by the synchrotron X-ray microprobe equals 0.5 is shifted to the lower-energy side by 0.2 eV or more as compared with the H+ conductive layer in the above (c). On the other hand, in this specification, the "H+ conductive layer" is a layer that does not satisfy the above (a) to (c). In the present specification, the "H+ conductive layer" may be a layer that does not satisfy the above formula (2) (that is, the left side of the above formula (2) is less than 0.05) in the above (a), may be a layer that is white (bright color) as compared with the H- conductive layer in the above (b), and may be a layer in which the position at which the normalized absorbance of the μXAFS spectrum measured by the synchrotron X-ray microprobe equals 0.5 is shifted to the higher-energy side by 0.2 eV or more as compared with the H- conductive layer in the above (c). In the "H+ conductive layer", in the above (a), the left side of the above formula (2) is preferably 0.03 or less, more preferably 0.01 or less, and most preferably 0.00.

The ceramic reversible cell according to the embodiments of the present invention preferably further satisfies the following formula (3) when brought into an equilibrium state by bringing the dry hydrogen having a moisture amount of 20ppm or less in terms of volume ratio into contact at 500°C to 900°C.

$$1.5 < [O]/[A] \leq 2.30 \cdots (3)$$

In the formula (3), [O] represents a content represented in mol% of oxygen atoms present at the oxygen position of the perovskite structure obtained from the Rietveld analysis result of the neutron diffraction pattern.

Satisfying the formula (3) causes a certain number or more of oxygen defects to be present, allowing a percolation path of oxygen defects to be formed, and the H-conductivity to be improved. [O]/[A] in the formula (3) is preferably more than 1.5 and 2.25 or less.

In preferred embodiments of the present invention, it is preferable that the H-conductive layer satisfies the above formula (3), and the H+ conductive layer does not satisfy the above formula (3) (for example, 2.30< [O]/[A] < 3.00).

The ceramic reversible cell according to the embodiments of the present invention includes the perovskite-type metal oxide or the like described above, and for example, one surface to be brought into contact with the dry hydrogen can be used as a fuel electrode, and the other surface facing the fuel electrode can be used as an air electrode. That is, in an embodiment of the present invention, the ceramic reversible cell may be a single layer including the above-described perovskite-type metal oxide or the like. In an embodiment of the present invention, the single layer of the ceramic reversible cell may include a perovskite-type metal oxide or the like of 50 area% or more, 75 area% or more, or 90 area% or more in a cross-sectional view parallel to the layer thickness direction. In addition, in the single layer, the perovskite-type metal oxide or the like may have a continuous portion from the fuel electrode to the air electrode.

A ceramic reversible cell may include a plurality of layers without departing from the objective of the embodiments of the present invention. For example, the ceramic reversible cell according to the embodiments of the present invention may have a first layer including the perovskite-type metal oxide or the like, and a second layer (that is, a cermet electrode layer) including the perovskite-type metal oxide or the like and a metal. Examples of the metal include one or more selected from the group consisting of Ni, Fe, Co, Pd, Cu and Ru, and preferable examples thereof include one or more selected from the group consisting of Ni, Fe and Ru. The second layer may be porous so as to increase the area where the electrode reaction occurs. For example, the ceramic reversible cell according to the embodiments of the present invention may have a first layer (also referred to as an electrolyte layer) including the perovskite-type metal oxide or the like, and a fuel electrode layer (for example, a Pt layer) known as a second layer.

The thicknesses of the first layer and the second layer are not particularly limited, and the first layer may have a thickness similar to, for example, a known electrolyte layer, and the second layer may have a thickness similar to, for example, a known fuel electrode layer. The method for producing the first layer and the second layer is not particularly limited, and the first layer can be fabricated, for example, by a method similar to that used for a known electrolyte layer, and the second layer can be fabricated, for example, by a method similar to that used for a known fuel electrode layer. The first layer and the second layer may be in direct contact with each other, but may not be in contact with each other, that is, another layer may be provided between the first layer and the second layer.

The ceramic reversible cell according to the embodiments of the present invention can be used, for example, with the second layer side as a fuel electrode, the first layer side as an air electrode, and the dry hydrogen in contact with the second layer at a high temperature. The perovskite-type metal oxide or the like included in the second layer is brought into contact with the dry hydrogen at a high temperature to be in an equilibrium state, and as a result, the above formula (2) can be satisfied regardless of the presence or absence of a metal (Ni or the like) in the second layer.

Further, the ceramic reversible cell according to the embodiments of the present invention may have the second layer, the first layer, and a third layer including a conductive oxide in this order. The third layer may be porous so as to increase the area where the electrode reaction occurs. As the conductive oxide, a double conductive material ($La_{1-x}Sr_xCoO_{3-\delta}$ (LSC), $LaSrCoO_{4+\delta}$ (LSC4), $LaNiO_{3-\delta}$ (LNO), $La_{1-x}Sr_xCo_{1-y}Fe_yO_{3-\delta}$ (LSCF), $La_{1-x}Sr_xMnO_{3-\delta}$ (LSM), $Sm_xSr_{1-x}CoO_{3-\delta}$ (SSC), and the like) that conducts oxide ions and electrons (holes) or a triple conductive material ($BaCo_{1-x-y-z}Fe_xZr_yY_zO_{3-\delta}$ (BCFZY), $BaPr_{1-x}Y_xO_{3-\delta}$ (BPY), $PrNi_{1-x}Co_xO_{3-\delta}$ (PNC), $PrBa_{1-x}Sr_xCo_{2-y}Fe_yO_{5+\delta}$ (PBSCF), $NdBa_{1-x}Sr_xCo_{2-y}Fe_yO_{5+\delta}$ (NBSCF), $PrBa_{1-x}Ca_xCo_2O_{5+\delta}$ (PBCC), $Ba_{1-x}Gd_{0.8}La_{0.2+x}Co_2O_{6-\delta}$ (BGLC), and the like) that conducts protons, oxide ions and electrons (holes) can be suitably used. In order to obtain a ceramic reversible cell with more favorable properties, the third layer preferably includes any one or more selected from the group consisting of double conductive materials and triple conductive materials, and more preferably includes any one or more selected from triple conductive materials. The ceramic reversible cell according to the embodiments of the present invention can be used, for example, with the second layer side as a fuel electrode, the third layer side as an air electrode, and the dry hydrogen in contact with the second layer at a high temperature. The thickness of the third layer is not particularly limited, and the third layer may have a thickness similar to that of a known air electrode layer, for example. The method for producing the third layer is not particularly limited, and for example, the third layer can be fabricated by s method similar to that used for a known air electrode layer. The third layer and the first layer may be in direct contact with each other, but may not be in contact with each other, that is, another layer may be provided between the third layer and the first layer.

Further, the ceramic reversible cell according to the embodiments of the present invention may have a fourth layer that is an interface functional layer between the first layer and the third layer. The fourth layer may include a second conductive oxide different from the conductive oxide included in the third layer. The fourth layer may include a second perovskite-type metal oxide and/or a hydrate thereof, and the second perovskite-type metal oxide and/or the hydrate thereof may satisfy the following formula (6) and any one of the following formulas (7a) and (8a), further satisfy the following formula (7b) when the following formula (7a) is satisfied, and further satisfy the following formula (8b) when the following formula (8a) is satisfied.

$$([Ba] + [R^1] + [R^2] + [Fe])/[A^1] \geq 0.75 \cdots (6)$$

$$[Ba] + [R^1] \leq [Fe] + [M^1] + [M^2] \cdots (7a)$$

$$[Ba] : [R^1] : [R^2] : [Fe] : [M^1] : [M^2] = (1 - x_a - y_a) : x_a : y_a : c (1 - l_a - m_a) : cl_a : cm_a \qquad (7b)$$

$$[Ba] + [R^1] > [Fe] + [M^1] + [M^2] \cdots (8a)$$

$$[Ba] : [R^1] : [Fe] : [M^1] : [M^2] : [R^2] = (1 - x_b) : x_b : c (1 - l_b - m_b - n_b) : cl_b : cm_b : cn_b \quad (8b)$$

In the formulas (6) to (8b), $R^1$ is any one or more selected from the group consisting of La, Ce, Pr, Nd, Pm, Sm, Eu and Gd, $R^2$ is any one or more selected from the group consisting of Sc, Y, Tb, Dy, Ho, Er, Tm, Yb and Lu, $A^1$ is all elements except oxygen and hydrogen, $M^1$ is any one or more selected from the group consisting of Li, Na, Mg, Al, Ca, Cu, Zn, Ga, Ag, Cd, In, Hg and Tl, and $M^2$ is any one or more selected from the group consisting of metals in periods of 4 to 6 and Groups 4 to 10 of the periodic table (excluding Fe), [Ba], $[R^1]$, $[R^2]$, [Fe], $[A^1]$, $[M^1]$ and $[M^2]$ each represent the content of Ba, $R^1$, $R^2$, Fe, $A^1$, $M^1$ and $M^2$ in mol%, and satisfy the relationships of $0 \leq (x_a+y_a) < 1.0$, $0 \leq (l_a + m_a) \leq 0.3$, $0 \leq m_a < 0.3$, $0.90 \leq c \leq 1.10$, $0 \leq x_b < 1.0$, $0 \leq (l_b + m_b + n_b) \leq 0.3$, and $0 \leq m_b < 0.3$.

The fourth layer may include a metal oxide having a perovskite structure represented by the general formula $ABO_3$ and/or a hydrate thereof. Examples of the perovskite structure include a cubic crystal, a hexagonal crystal, an orthorhombic crystal, a monoclinic crystal, and a tetragonal crystal, and although not particularly limited, a cubic perovskite may be stable, and is preferable. Whether or not these perovskite structures are included can be confirmed by acquiring an electron beam diffraction pattern using a field emission transmission electron microscope (FE-TEM).

In one embodiment, the fourth layer may include the second perovskite-type metal oxide and/or a hydrate thereof in a cross-sectional view parallel to the lamination direction in an amount of 50 area% or more, 75 area% or more, or 90 area% or more. In addition, the fourth layer may have a portion where the second perovskite-type metal oxide and/or the hydrate thereof is continuous from one surface to the other surface in the lamination direction. These can be confirmed by performing cross-sectional TEM observation.

The left side of the formula (6) increases, for example, when the amount of impurity elements is small. From the viewpoint of reducing impurities, the left side of the formula (6) is preferably 0.80 or more. In addition, the following formula (9) is preferably satisfied.

$$([Ba] + [R^1] + [R^2] + [Fe])/[A^2] \geq 0.60 \cdots (9)$$

Herein, $A^2$ represents all elements except for oxygen.

The left side of the formula (9) also increases, for example, when the amount of impurity elements is small. From the viewpoint of reducing impurities, the left side of the formula (9) is more preferably 0.65 or more.

When the formula (7a) is satisfied (that is, in the case of $Ba_{1-xa-ya}R^1_{xa}R^2_{ya}Fe_{c(1-la-ma)}M^1_{cla}M^2_{cma}O_{3-\delta}$ layer), it is preferable to substitute Ba forming a divalent cation with $R^1$ and/or $R^2$ forming a trivalent cation, because unstable $Fe^{4+}$ can be changed to $Fe^{3+}$, and the perovskite structure can be made more stable. From the viewpoint of stabilizing the perovskite structure, preferably $0 < (x_a + y_a) < 1.0$, more preferably $0.5 \leq (x_a + y_a) < 1.0$, and still more preferably $0.7 \leq (x_a + y_a) < 1.0$. Similarly, when the formula (8a) is satisfied (that is, in the case of $Ba_{1-xb}R^1_{xb}Fe_{c(1-lb-mb-nd)}M^1_{clb}M^2_{cmb}R^2_{cnb}O_{3-\delta}$ layer), it is preferable to substitute Ba forming a divalent cation with $R^1$ forming a trivalent cation, because unstable $Fe^{4+}$ can be changed to $Fe^{3+}$, and the perovskite structure can be made more stable. From the viewpoint of stabilizing the perovskite structure, preferably $0 < x_b < 1.0$, more preferably $0.5 \leq x_b < 1.0$, and still more preferably $0.7 \leq x_b < 1.0$.

In addition, $R^1$ is set to one or more selected from the group consisting of La, Ce, Pr, Nd, Pm and Sm, thereby allowing the perovskite structure to be more stable.

On the other hand, reducing the amount of substitution and increasing Ba cause water molecules to be more adsorbed, and proton conductivity may be improved. From the viewpoint of water adsorption and the like, when the formula (7a) is satisfied, $0 \leq (x_a + y_a) \leq 0.5$ is preferable, and $0 \leq (x_a + y_a) \leq 0.3$ is more preferable. Similarly, when the formula (8a) is satisfied, $0 \leq x_b \leq 0.5$ is preferable, and $0 \leq x_b \leq 0.3$ is more preferable.

When the formula (7a) is satisfied (that is, in the case of $Ba_{1-xa-ya}R^1_{xa}R^2_{ya}Fe_{c(1-la-ma)}M^1_{cla}M^2_{cma}O_{3-\delta}$ layer), Fe can be substituted with $M^1$ (any one or more selected from the group consisting of Li, Na, Mg, Al, Ca, Cu, Zn, Ga, Ag, Cd, In, Hg and Tl) or $M^1$ and $M^2$ (any one or more selected from the group consisting of metals in periods of 4 to 6 and Groups 4 to 10 of the periodic table). Similarly, when the formula (8a) is satisfied (that is, in the case of $Ba_{1-xb}R^1_{xb}Fe_{c(1-lb-mb-nb)}M^1_{clb}M^2_{cmb}R^2_{cnb}O_{3-\delta}$ layer), Fe can be substituted with any one or more selected from the group consisting of $M^1$, $M^2$ and $R^2$ (but substitution cannot be made only with $M^2$).

$M^1$ and $R^2$ have a smaller ionic valence than Fe. Therefore, substituting Fe with $M^1$ and/or $R^2$ may cause oxygen deficiency to occur in the $Ba_{1-xa-ya}R^1_{xa}R^2_{ya}Fe_{c(1-la-ma)}M^1_{cla}M^2_{cma}O_{3-\delta}$ layer or the $Ba_{1-x}bR^1_{xb}Fe_{c(1-lb-mb-nb)}M^1_{clb}M^2_{cmb}R^2_{cnb}O_{3-\delta}$ layer. In addition to $M^1$ and/or $R^2$, Fe may be substituted with $M^2$ having anionic valence equivalent to that of Fe.

From the viewpoint of improving the performance of the cell, it is necessary to reduce the amount of substitution of Fe to some extent. Therefore, it is preferable to satisfy $0 \leq (l_a + m_a) \leq 0.3$, $0 \leq m_a < 0.3$, $0 \leq (l_b + m_b + n_b) \leq 0.3$, and $0 \leq m_a < 0.3$. More preferably, $0.05 \leq (l_a + m_a) \leq 0.25$, $0 \leq m_a < 0.25$, $0.05 \leq (l_b + m_b + n_b) \leq 0.25$, and $0 \leq m_b < 0.25$.

$M^1$ is preferably one or more selected from the group consisting of Li, Mg, Al, Cu, Zn, Ga, Cd, In and Tl, because the perovskite structure can be stabilized from the viewpoint of the ionic radius. $M^1$ is more preferably one or more selected from the group consisting of Mg, Al, Cu, Zn and Ga because the perovskite structure can be more stabilized from the viewpoint of the ionic radius.

$M^2$ is preferably one or more selected from Ti, V, Cr and metals in periods of 5 to 6 and Groups 4 to 10 of the periodic table because the perovskite structure can be stabilized from the viewpoint of the ionic radius.

In the embodiments of the present invention, whether or not formulas (6) to (8b) are satisfied can be examined by, for example, general composition analysis (FE-TEM/EDS and the like). Elements (for example, impurities) other than the elements specified above can also be detected in the composition analysis, but it is sufficient that the formulas (6), (7a) and (7b) are satisfied, or the formulas (6), (8a) and (8b) are satisfied. In addition, a measurement error may occur in the composition analysis, but the value c is set in consideration of the measurement error, and it is sufficient that $0.90 \leq c \leq 1.10$.

In the embodiments of the present invention, the fourth layer can be formed by a known method. The thickness of the fourth layer is not particularly limited. In one embodiment, the thickness of the fourth layer may be, for example, 5 to 500 nm, 10 to 200 nm, or 30 to 170 nm.

In the ceramic reversible cell according to the embodiments of the present invention, the fourth layer and the third layer may be in direct contact with each other, but may not be in contact with each other, that is, another layer may be provided between the fourth layer and the third layer. The first layer and the fourth layer may be in direct contact with each other, but may not be in contact with each other, that is, another layer may be provided between the first layer and the fourth layer.

The ceramic reversible cell according to the embodiments of the present invention can be used as a steam electrolysis cell or an ammonia-producing co-electrolysis cell. In addition, the ceramic reversible cell according to the embodiments of the present invention can be used as a fuel cell. That is, the steam electrolysis cell (or an ammonia-producing co-electrolysis cell or a fuel cell) according to the embodiments of the present invention includes the ceramic reversible cell according to the embodiments of the present invention.

Examples

Hereinafter, embodiments of the present invention will be described more specifically with reference to the Examples. The embodiments of the present invention are not limited by the following examples, and can be implemented with appropriate modifications within the scope that can be consistent with the above-described and later-described gist, and all of them are included in the scope of the embodiments of the present invention.

Example 1

In Example 1, a sample having a relatively thin electrolyte layer was fabricated, and the properties thereof were evaluated.

<Fabrication of powder of perovskite-type metal oxide>

Powders of perovskite-type metal oxides (and/or hydrates thereof and/or hydrides thereof) included in a first layer and a second layer were fabricated as follows. First, $BaCO_3$ (Kojundo Chemical Lab. Co., Ltd.), $In_2O_3$ (KANTO CHEMICAL CO., INC.) and $ZrO_2$ (Kojundo Chemical Lab. Co., Ltd.) were mixed in a ball mill at a predetermined ratio, heated at 900°C for 6 hours, ball milled again, and then further heated at 1300°C for 8 hours. The mixture was subjected to ball mill grinding again, then molded by uniaxial pressing and isostatic pressing, and heated at 1500°C for 8 hours to obtain a dense sintered body. The dense sintered body was ground in a mortar to obtain a powder sample. As a result, a powder of a perovskite-type metal oxide (hereinafter, may be referred to as "$BaZr_{0.5}In_{0.5}O_{3-\delta}$" or "$BZI_{55}$") with A = Ba, B = Zr, M = In, and x = 0.5 for the first layer and the second layer was obtained.

<Fabrication of ceramic reversible cell>

The above $BZI_{55}$ powder, starch (KANTO CHEMICAL CO., INC.), and NiO powder (Kojundo Chemical Lab. Co., Ltd.) were mixed in a ball mill at a weight ratio of 40:10:60, and uniaxially molded and isostatically pressed to fabricate a green disk having a diameter of 15 mm and a thickness of 1.0 mm as the second layer (corresponding to a fuel electrode layer).

A slurry was prepared by dispersing the $BZI_{55}$ powder in a 1:1 mixed solution of a binder (5 wt% ammonium stearate dissolved in $\alpha$-terpineol) solution and a polyethyleneimine solution (20 wt% polyethyleneimine (Mw: 28,000) dissolved in $\alpha$-terpineol), and the slurry was spin coated on both sides of the second layer. This was sintered at 1400°C for 8 hours, and one surface was mechanically polished with a SiC abrasive. Thus, a layer configuration of the second layer ($NiO-BZI_{55}$)/the first layer ($BZI_{55}$) was obtained.

A powder of the second perovskite-type metal oxide ($Ba_{0.95}La_{0.05}FeO_{3-\delta}$, hereinafter also referred to as "BLF") included in a fourth layer was synthesized by a citric acid precursor method. Specifically, using citric acid ($C_6H_7O \cdot H_2O$, purity: 99.5 %, KANTO CHEMICAL CO., INC., hereinafter referred to as "CA") as a chelating agent, the precursor solution was prepared such that CA : total number of moles of metal atoms was 2:1 and the concentration of metal atoms was 2 mol/dm$^2$. As the precursor solution, the following material was added and dissolved in Milli-Q (registered trademark) water in the required stoichiometric ratio (Ba:La:Fe = 0.95:0.05:1).

Materials: $Ba(NO_3)_2$ (purity: 99%, KANTO CHEMICAL CO., INC.), $La(NO_3)_3 \cdot 1.5H_2O$ (purity: 99.99%, KANTO CHEMICAL CO., INC.), and $Fe(NO_3)_3 \cdot 9H_2O$ (purity: 99.9%, FUJIFILM Wako Pure Chemical Corporation)

Further, a predetermined amount of CA was added to the precursor solution for preparing. The precursor solution was stirred and heated at 80°C to evaporate $H_2O$ and promote polymerization, thereby obtaining a precursor gel. The gel was calcined at 500°C for 1 hour, and then the pulverized precursor powder was sintered in air at 1000°C for 8 hours to obtain BLF powder.

The obtained BLF powder was molded into pellets having a diameter of 25 mm and a thickness of 5 mm, and subsequently sintered at 1100°C for 6 hours to obtain a BLF target used for a pulsed laser deposition (PLD) method described later.

The BLF target obtained above was deposited on the first layer by a PLD apparatus (UPS-10000S ultra-vacuum chamber system, ULVAC, Inc.) to fabricate a fourth layer.

A powder of $PrBa_{0.5}Sr_{0.5}Co_{1.5}Fe_{0.5}O_{5-\delta}$ (hereinafter also referred to as "PBSCF") included in a third layer was synthesized by a citric acid precursor method. Using citric acid (CA; $C_6H_7O \cdot H_2O$, 99.5 %, KANTO CHEMICAL CO., INC.) as a chelating agent, the precursor solution was adjusted such that CA : the total number of moles metal atoms M was 2:1 and the concentration of M was 2 mol/dm$^2$. The precursor solution was adjusted by dissolving $Sr(NO_3)_2$ (98 %, KANTO CHEMICAL CO., INC.) and $Co(NO_3)_2 \cdot 6H_2O$ (98 %, KANTO CHEMICAL CO., INC.), $Ba(NO_3)_2$ (99 %, KANTO CHEMICAL CO., INC.), $Pr(NO_3)_3 \cdot 3H_2O$ (99.5 %, FUJIFILM Wako Pure Chemical Corporation), and $Fe(NO_3)_3 \cdot 9H_2O$ (99.9 %, Wako Pure Chemical Industries, Ltd.) in milli-Q water at a required stoichiometric ratio, and further adding a predetermined amount of CA. This was stirred and heated at 80°C to evaporate $H_2O$, and polymerization was promoted to obtain a precursor gel. The gel was calcined at 500°C for 1 hour, and then the pulverized precursor powder was sintered in air at 1000°C for 8 hours to obtain a PBSCF powder.

The resulting PBSCF powder was dispersed in a 1:1 mixed solution of a binder (5 wt% ammonium stearate dissolved in $\alpha$-terpineol) solution and a polyethyleneimine solution (20 wt% polyethyleneimine (Mw: 28000) dissolved in $\alpha$-terpineol) to prepare a slurry, which was then screen printed on the fourth layer to form the third layer.

Finally, baking was performed at 800°C to obtain a layer configuration (second layer (NiO-BZI$_{55}$)/first layer (BZI$_{55}$)/fourth layer (BLF)/third layer (PBSCF, about 100 $\mu$m) before dry hydrogen treatment.

<Dry hydrogen treatment>

Humidified air including 3 vol% $H_2O$ was supplied to the third layer (corresponding to an air electrode layer) side of the layer configuration, and a dried $H_2$/Ar gas ($H_2O$ concentration: 10 ppm or less in volume ratio, $H_2$ concentration: 10 vol%) was supplied to the second layer (corresponding to a fuel electrode layer) side of the layer configuration so as to reduce NiO of the second layer to Ni and introduce hydride ions into the BZI$_{55}$ inside the second layer (and the second layer side of the first layer), and forming was performed at 800°C for 12 hours (hereinafter, the BZI$_{55}$ into which hydride ions have been introduced is also referred to as "HBZI$_{55}$"). As described above, a ceramic reversible cell (second layer (Ni-HBZI$_{55}$)/first layer ((H) BZI$_{55}$)/fourth layer (BLF)/third layer (PBSCF) of the Example was obtained.

On the other hand, humidified air including 3% $H_2O$ was supplied to the air electrode layer side on the third layer (corresponding to an air electrode layer) side of the layer configuration, and humidified $H_2$/Ar gas ($H_2O$ concentration: 3 vol%, $H_2$ concentration: 9 vol%) was supplied to the second layer (corresponding to a fuel electrode layer) side of the layer configuration so as to reduce NiO in the second layer to Ni, and forming was performed at 700°C for 12 hours. As described above, a ceramic reversible cell (second layer (Ni-BZI$_{55}$)/first layer (BZI$_{55}$)/fourth layer (BLF)/third layer (PBSCF) of the Comparative Example was obtained.

<Neutron diffraction>

(Sample fabrication)

In order to simplify the measurement of neutron diffraction, a powder sample (Sample 1) corresponding to HBZI$_{55}$ in the ceramic reversible cell of the Example and a powder sample (Sample 2) corresponding to BZI$_{55}$ in the ceramic reversible cell of the Comparative Example were separately fabricated as follows. Further, as examples in which hydride ions are introduced similarly to the perovskite-type metal oxide of the Examples, a sample (Sample 3) obtained by subjecting a powder of a perovskite-type metal oxide (hereinafter, may be referred to as "$BaZr_{0.3}In_{0.7}O_{3-\delta}$" or "BZI$_{37}$") with A = Ba, B = Zr, M = In, and x = 0.7 to dry hydrogen treatment, a sample (Sample 4) obtained by subjecting a powder of a perovskite-type metal oxide (hereinafter, may be referred to as "$BaSn_{0.3}In_{0.7}O_{3-\delta}$" or "$BSI_{37}$") with A = Ba, B = Sn, M = In, and x = 0.7 to dry hydrogen treatment, and a sample (Sample 5) obtained by subjecting a powder of a perovskite-type metal oxide (hereinafter, may be referred to as "$BaCe_{0.3}In_{0.7}O_{3-\delta}$" or "$BCI_{37}$") with A = Ba, B = Ce, M = In, and x = 0.7 to dry hydrogen treatment were fabricated as follows.

(Sample 1)

A powder of $BZI_{55}$ fabricated according to <Fabrication of perovskite-type metal oxide powder> described above was heated in dry deuterium ($H_2O$ concentration: 10 ppm or less in a volume ratio) at 800°C for 12 hours to obtain Sample 1 in which hydride ions were introduced into $BZI_{55}$.

(Sample 2)

A powder of $BZI_{55}$ fabricated according to <Fabrication of perovskite-type metal oxide powder> described above was heated at 300°C for 72 hours in a 3 vol% $D_2O$-containing argon gas generated by bubbling in heavy water ($D_2O$) at 25°C to obtain Sample 2.

(Sample 3)

A powder of $BZI_{37}$ was obtained by changing the ratio between $In_2O_3$ (KANTO CHEMICAL CO., INC.) and $ZrO_2$ (Kojundo Chemical Lab. Co., Ltd.) in the same manner as in <Fabrication of perovskite-type metal oxide powder> described above. A powder of $BZI_{37}$ was heated in dry deuterium ($H_2O$ concentration: 10 ppm or less in a volume ratio) at 600°C for 24 hours to obtain Sample 3.

(Sample 4)

A powder of $BSI_{37}$ was obtained by changing $ZrO_2$ (Kojundo Chemical Lab. Co., Ltd.) to $SnO_2$ (Kojundo Chemical Lab. Co., Ltd.), and further adjusting the mixing ratio in the same manner as in <Fabrication of perovskite-type metal oxide powder> described above. A powder of $BSI_{37}$ was heated in dry deuterium ($H_2O$ concentration: 10 ppm or less in a volume ratio) at 500°C for 24 hours to obtain Sample 4.

(Sample 5)

A powder of $BCI_{37}$ was obtained by changing $ZrO_2$ (Kojundo Chemical Lab. Co., Ltd.) to $CeO_2$ (Kojundo Chemical Lab. Co., Ltd.), and further adjusting the mixing ratio in the same manner as in <Fabrication of perovskite-type metal oxide powder> described above. A powder of $BCI_{37}$ was heated in dry deuterium ($H_2O$ concentration: 10 ppm or less in a volume ratio) at 600°C for 24 hours to obtain Sample 5.

(Sample 6)

$SrCO_3$ (Kojundo Chemical Lab. Co., Ltd.), $In_2O_3$ (KANTO CHEMICAL CO., INC.), and $ZrO_2$ (Kojundo Chemical Lab. Co., Ltd.) were mixed at a predetermined ratio, and calcined at 800°C. Thereafter, the mixture was pulverized and mixed in a ball mill, then molded by uniaxial pressing and isostatic pressing, and sintered at 1600°C for 8 hours to obtain a dense sintered body. As the powder sample, the dense sintered body was ground in a mortar. Thus, a powder of a perovskite-type metal oxide (hereinafter, may be referred to as "$SrZr_{0.5}In_{0.5}O_{3-\delta}$" or "$SZIss$") with A = Sr, B = Zr, M = In, and x = 0.5 was obtained.

A powder of $SZI_{55}$ was heated in dry deuterium ($H_2O$ concentration: 10 ppm or less in a volume ratio) at 780°C for 12 hours to obtain Sample 6.

Samples 1 to 6 were subjected to neutron diffraction (NRD) measurement by the Time of Fright method. NRD measurement was performed with JASRI Spica. For Rietveld analysis of the NRD pattern, a Z Rietveld program was used. Rietveld analysis was performed assuming the space group Pm-3m.

Fig. 4A shows an NRD pattern and Rietveld calculated profile of Sample 1 (corresponding to $HBZI_{55}$ in the ceramic reversible cell of the Example). Structural parameters and compositions determined by NRD Rietveld analysis are shown in Table 1. In addition, in the following table, "$D_o$" represents a hydrogen atom (deuterium atom) present at the oxygen position (oxygen site) of the perovskite structure, "$D_{fcc}$" represents a hydrogen atom (deuterium atom) present at the [100] plane center position of the perovskite structure, and "$D_{oH}$" represents a hydrogen atom (deuterium atom) bonded to the lattice oxygen of the perovskite structure.

In the following Tables 1 and 3 to 6, it was determined that the structure refinement could be performed with sufficient accuracy when the S value was 3.5% or less and the Rwp value was 6% or less. Further, when the Rp value was 5% or less, it was determined that the structure refinement could be performed with better accuracy.

In addition, in Table 2, unlike other samples, Sample 2 heated in an argon gas containing 3% by volume $D_2O$ was analyzed, and for example, Sample 2 was susceptible to external $H_2O$, and the accuracy was inevitably reduced, but when the S value was 9% or less and the Rwp value was 15% or less, it was determined that structure refinement could be performed with sufficient accuracy. Further, when the Rp value was 10% or less, it was determined that the structure refinement could be performed with better accuracy.

[Table 1]

| Sample 1 (corresponding to $HBZI_{55}$ in ceramic reversible cell in the Example) | | | | |
|---|---|---|---|---|
| Lattice site | Position | Occupancy | S(%) | 2.99 |
| Ba(1a) | (1/2, 1/2, 1/2) | 1 | Rwp(%) | 5.37 |
| Zr(1b) | (0, 0, 0) | 0.5 | Rp(%) | 3.75 |
| In(1b) | (0, 0, 0) | 0.5 | Lattice constant a (Å) | 4.19899 |
| O(3e) | (1/2, 0, 0) | 0.761 | Composition | $BaZr_{0.5}In_{0.5O}O_{2.28} (D_o)_{0.29}(D_{fcc})_{0.19}$ |
| $D(D_o)$ | (1/2, 0, 0) | 0.0971 | | |
| $D(D_{fcc})$ | (1/2, 1/2, 0) | 0.0639 | | |

The following can be seen from Table 1. The Rwp value and the s value were sufficiently small, and structure refinement was performed with high accuracy. From the analysis, the composition was determined as $BaZr_{0.5}In_{0.5}O_{2.28}D_{0.48}$. That is, Sample 1 (corresponding to $HBZI_{55}$ in the ceramic reversible cell of the Example) satisfied the above formula (1), and as a result of bringing the sample into an equilibrium state by bringing dry hydrogen having a water content of 20 ppm or less in a volume ratio into contact with the sample at 500°C to 900°C, the left side of the above formula (2) was 0.48, indicating that the formula (2) was satisfied and hydride ions were introduced. In addition, for Sample 1, [O]/[A] in the above formula (3) was 2.28, indicating that the formula (3) was satisfied, which was a preferable result.

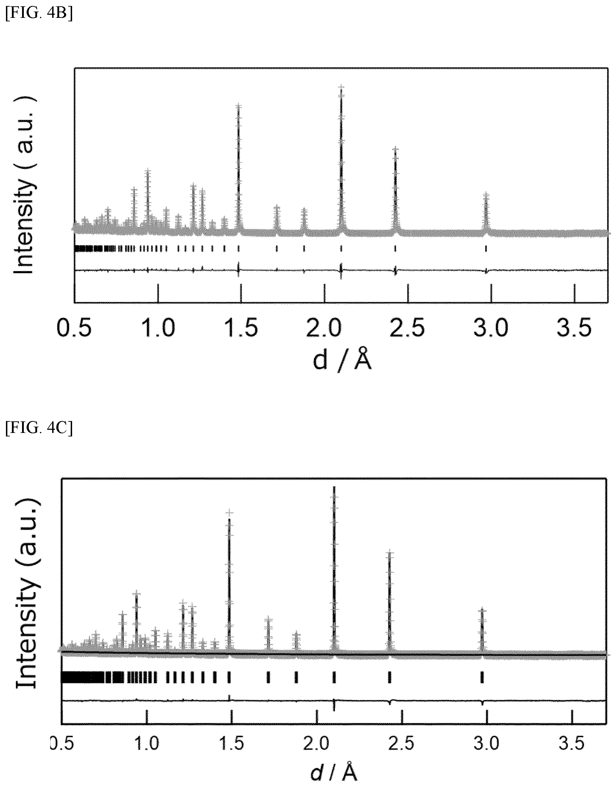

Fig. 4B shows an NRD pattern and Rietveld calculated profile of Sample 2 (corresponding to $BZI_{55}$ in the ceramic reversible cell of the Comparative Example). Structural parameters and compositions determined by NRD Rietveld analysis are shown in Table 2.

[Table 2]

| Sample 2 (corresponding to $BZI_{55}$ in ceramic reversible cell of the Comparative Example) | | | | |
|---|---|---|---|---|
| Lattice site | Position | Occupancy | S(%) | 8.29 |
| Ba(1a) | (1/2, 1/2, 1/2) | 1 | Rwp(%) | 13.78 |
| Zr(1b) | (0, 0, 0) | 0.5 | Rp(%) | 7.58 |
| In(1b) | (0, 0, 0) | 0.5 | Lattice constant a (Å) | 4.20200 |
| O(3e) | (1/2, 0, 0) | 0.912 | Composition | $BaZr_{0.5}In_{0.5}O_{2.53} (OD_{OH})_{0.44}$ |
| $D(D_{oH}; 24k)$ | (0.55, 0.23, 0) | 0.0184 | | |

The following can be seen from Table 2. Under the assumption that it is susceptible to external $H_2O$, the Rwp value and the s value are sufficiently small values, and the structure refinement could be performed with high accuracy. From the above composition, it has been found that no hydride ions were introduced into Sample 2 (corresponding to $BZI_{55}$ in the ceramic reversible cell of the Comparative Example), and there were oxygen vacancies having a formula weight of approximately 0.25. Therefore, it has been suggested from the above formula (F4) that proton defects were generated in the water vapor atmosphere of the air electrode.

Fig. 4C shows the NRD pattern and Rietveld calculated profile of Sample 3. Structural parameters and compositions determined by NRD Rietveld analysis are shown in Table 3.

[Table 3]

| Sample 3 | | | | |
|---|---|---|---|---|
| Lattice site | Position | Occupancy | S(%) | 1.60 |
| Ba(1a) | (1/2, 1/2, 1/2) | 1 | Rwp(%) | 4.00 |
| Zr(1b) | (0, 0, 0) | 0.3 | Rp(%) | 3.41 |
| In(1b) | (0, 0, 0) | 0.7 | Lattice constant a (Å) | 4.20222 |
| O(3e) | (1/2, 0, 0) | 0.718 | Composition | $BaZr_{0.3}In_{0.7O}O_{2.15}$ $(Do)_{0.13}$ |
| D($D_o$) | (1/2, 0, 0) | 0.0419 | | |
| D($D_{fcc}$) | (1/2, 1/2, 0) | 0 | | |

The following can be seen from Table 3. The Rwp value and the s value were sufficiently small, and structure refinement was performed with high accuracy. From the analysis, the composition of Sample 3 was determined to be $BaZr_{0.3}In_{0.7}O_{2.15}D_{0.13}$, and satisfies the above formula (1) similarly to Sample 1, and as a result of bringing the sample into an equilibrium state by bringing dry hydrogen having a water content of 20 ppm or less in a volume ratio into contact with the sample at 500°C to 900°C, the left side of the above formula (2) was 0.13, indicating that the above formula (2) was satisfied, and hydride ions were introduced.

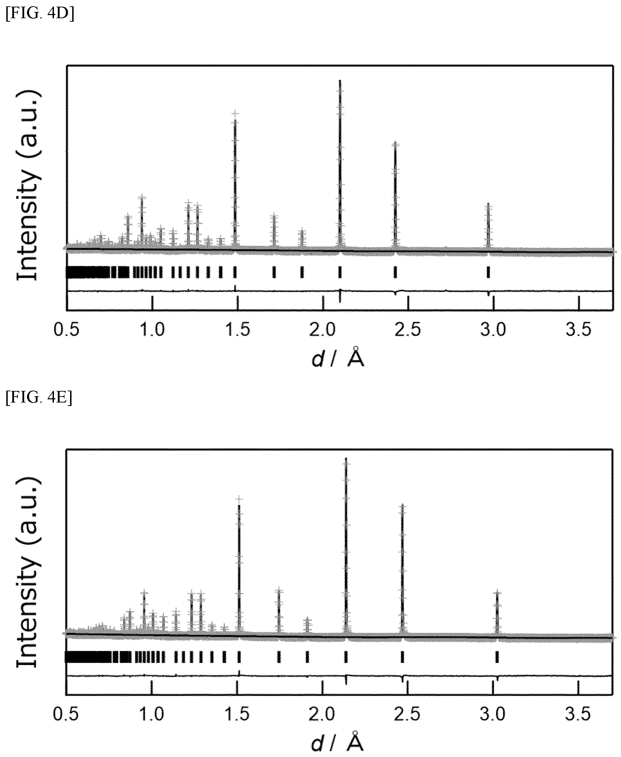

Fig. 4D shows the NRD pattern and Rietveld calculated profile of Sample 4. Structural parameters and compositions determined by NRD Rietveld analysis are shown in Table 4.

[Table 4]

| Sample 4 | | | | |
|---|---|---|---|---|
| Lattice site | Position | Occupancy | S(%) | 1.60 |
| Ba(1a) | (1/2, 1/2, 1/2) | 1 | Rwp(%) | 4.00 |
| Sn(1b) | (0, 0, 0) | 0.3 | Rp(%) | 3.41 |
| In(1b) | (0, 0, 0) | 0.7 | Lattice constant a (Å) | 4.20222 |
| O(3e) | (1/2, 0, 0) | 0.614 | Composition | $BaSn_{0.3}In_{0.7O}O_{1.84}$ $(Do)_{0.36}$ |
| D($D_o$) | (1/2, 0, 0) | 0.122 | | |
| D($D_{fcc}$) | (1/2, 1/2, 0) | 0 | | |

The following can be seen from Table 4. The Rwp value and the s value were sufficiently small, and structure refinement was performed with high accuracy. From the analysis, the composition of Sample 4 was determined to be $BaSn_{0.3}In_{0.7}O_{1.84}D_{0.36}$, and satisfies the above formula (1) similarly to Sample 1, and as a result of bringing the sample into an equilibrium state by bringing dry hydrogen having a water content of 20 ppm or less in a volume ratio into contact with the sample at 500°C to 900°C, the left side of the above formula (2) was 0.36, indicating that the above formula (2) was satisfied, and hydride ions were introduced.

Fig. 4E shows the NRD pattern and Rietveld calculated profile of Sample 5. Structural parameters and compositions determined by NRD Rietveld analysis are shown in Table 5.

[Table 5]

| Sample 5 | | | | |
|---|---|---|---|---|
| Lattice site | Position | Occupancy | S(%) | 1.71 |
| Ba(1a) | (1/2, 1/2, 1/2) | 1 | Rwp(%) | 4.02 |
| Ce(1b) | (0, 0, 0) | 0.3 | Rp(%) | 3.45 |
| In(1b) | (0, 0, 0) | 0.7 | Lattice constant a (Å) | 4.27734 |
| O(3e) | (1/2, 0, 0) | 0.707 | Composition | $BaCe_{0.3}In_{0.7O}O_{2.12}$ $(Do)_{0.21}$ |
| D($D_o$) | (1/2, 0, 0) | 0.0691 | | |

(continued)

| Sample 5 | | | | |
|---|---|---|---|---|
| Lattice site | Position | Occupancy | S(%) | 1.71 |
| $D(D_{fcc})$ | (1/2, 1/2, 0) | 0 | | |

The following can be seen from Table 5. The Rwp value and the s value were sufficiently small, and structure refinement was performed with high accuracy. From the analysis, the composition of Sample 5 was determined to be $BaCe_{0.3}In_{0.7}O_{2.12}D_{0.21}$, and satisfies the above formula (1) similarly to Sample 1, and as a result of bringing the sample into an equilibrium state by bringing dry hydrogen having a water content of 20 ppm or less in a volume ratio into contact with the sample at 500°C to 900°C, the left side of the above formula (2) was 0.21, indicating that the above formula (2) was satisfied, and hydride ions were introduced.

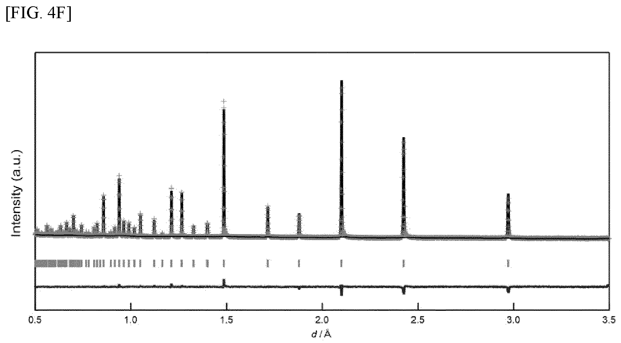

Fig. 4F shows the NRD pattern and Rietveld calculated profile of Sample 6. Structural parameters and compositions determined by NRD Rietveld analysis are shown in Table 6.

[Table 6]

| Lattice site | Position | Occupancy | S(%) | 1.29 |
|---|---|---|---|---|
| Sr(1a) | (1/2, 1/2, 1/2) | 1 | Rwp(%) | 3.854 |
| Zr(1b) | (0, 0, 0) | 0.5 | Rp(%) | 2,989 |
| In(1b) | (0, 0, 0) | 0.5 | Lattice constant a (Å) | 4.18992 |
| O(3e) | (1/2, 0, 0) | 0.7157 | Composition | $SrZr_{0.5}In_{0.5}O_{2.15} (D_o)_{0.16}$ |
| $D(D_o)$ | (1/2, 0, 0) | 0.0517 | | |
| $D(D_{fcc})$ | (1/2, 1/2, 0) | 0 | | |

The following can be seen from Table 6. The Rwp value and the s value were sufficiently small, and structure refinement was performed with high accuracy. From the analysis, the composition of Sample 6 was determined to be $SrZr_{0.5}In_{0.5}O_{2.15}D_{0.16}$, and satisfies the above formula (1) similarly to Sample 1, and as a result of bringing the sample into an equilibrium state by bringing dry hydrogen having a water content of 20 ppm or less in a volume ratio into contact with the sample at 500°C to 900°C, the left side of the above formula (2) was 0.16, indicating that the above formula (2) was satisfied, and hydride ions were introduced.

<Relationship between hydrogen partial pressure and amount of hydrogen absorbed>

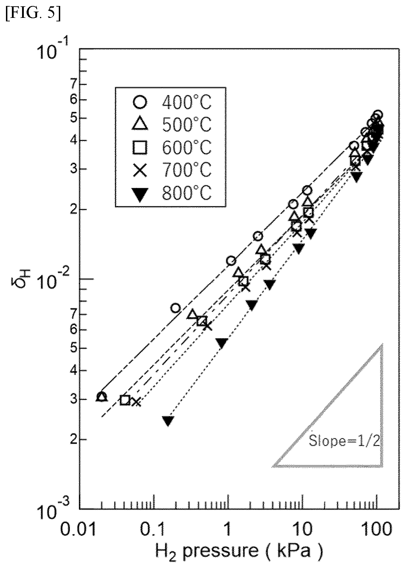

A powder sample (Sample 1') corresponding to $HBZI_{55}$ in the ceramic reversible cell of the Example was fabricated, and the relationship between the hydrogen partial pressure and the amount of hydrogen absorbed at each temperature was investigated. Sample 1' was fabricated by heating the $BZI_{55}$ powder fabricated according to <Fabrication of perovskite-type metal oxide powder> described above at 800°C for 12 hours in dry hydrogen ($H_2O$ concentration: 10 ppm or less in a volume ratio). The measurement was performed using PCT-2DWIN (Suzuki Shokan Co., Ltd.). The sample was heated to 800°C in vacuum ($<10^{-4}$ Pa), subsequently cooled to a target temperature, pure hydrogen gas was introduced while the temperature was maintained to adjust the hydrogen partial pressure ($p_{H2}$), and the amount of hydrogen absorbed in this case was measured. The results are shown in Fig. 5 (horizontal axis: hydrogen partial pressure (kPa), vertical axis: amount of hydrogen absorbed $\delta_H$). Herein, the hydrogen content of Sample l' in vacuum ($< 10^{-4}$ Pa) at each temperature was used as a reference, and the amount of hydrogen absorbed $\delta_H$ at each $p_{H2}$ was measured therefrom. $\delta_H$ is represented by a molar ratio when the Ba content of Sample 1' is 1. It is found that $\delta_H$ increases with an increase in $p_{H2}$ at each temperature, and $\log\delta_H$ increases with a slope of almost 1/2 with respect to $\log p_{H2}$. This result is in favorable agreement with the result expected from the above formula (F1), that is, the hydride ion defects of Sample l' increase according to the defect formula of the above formula (F1) together with the hydrogen partial pressure. As described above, it has been confirmed that in Sample 1' (corresponding to $HBZI_{55}$ in the ceramic reversible cell of the Example), hydride ion defects were formed by defect equilibrium with gas phase hydrogen.

<Evaluation of ceramic reversible cell properties (1): steam electrolysis cell>

A mixed gas having a volume ratio of $O_2$/Ar = 20/80 was passed through water at 60°C at a total flow rate of 40 sccm to prepare a mixed gas including 3 vol% of $H_2O$ gas, and the mixed gas was supplied to the third layer (corresponding to the air electrode layer) side. In the case of the cell of the Example, the dried $H_2$/Ar mixed gas ($H_2O$ concentration: 10 ppm or less in a volume ratio, $H_2$ concentration: 10 vol%) was supplied to the second layer (corresponding to the fuel electrode layer) side. In the case of the cell of the Comparative Example, a humidified hydrogen/Ar mixed gas ($H_2O$ concentration: 3 vol%, $H_2$ concentration: 9 vol%) prepared by passing a mixed gas having a volume ratio of $H_2$/Ar = 10/90 through water at 25°C at a total flow rate of 30 sccm was supplied to the second layer side.

Electrochemical measurements were performed using a potentiostat/galvanostat with a frequency response analyzer (SP-300, Bio-Logic Science Instruments SAS). The hydrogen evolution rate (v) of the second layer (corresponding to the fuel electrode layer) was quantified by analyzing the cathode exhaust gas using gas chromatography (490 Micro GC, Agilent Technologies, Inc.). The Faradaic efficiency η was calculated using the measured hydrogen evolution rate, the theoretical hydrogen evolution rates ($V_{meas}$ and $v_{theo}$, respectively), and the following formula (10).

$$\eta = v_{meas}/v_{theo} \times 100 = v_{meas}/(I \times (z \times F)^{-1}) \times 100 \ (\%) \cdots (10)$$

Herein, I represents an applied current, z represents the electron transport number in steam electrolysis, and F represents a Faraday constant (96,485 C/mol).

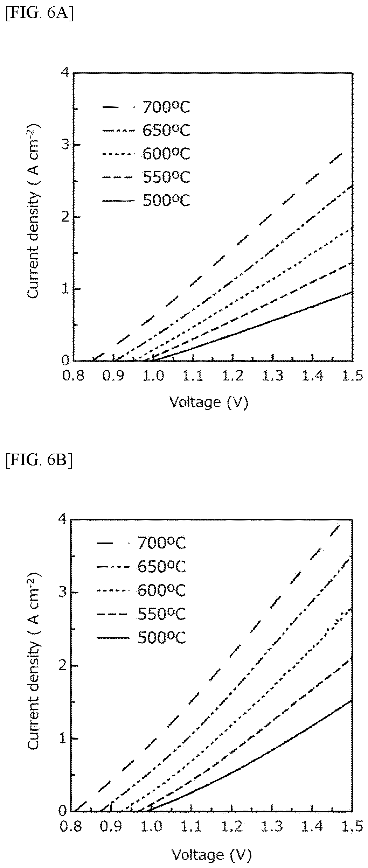

Fig. 6A shows a current-voltage (I-V) curve in water electrolysis of a cell (supply gas on second layer (fuel electrode layer) side (volume ratio: $H_2O$:$H_2$:Ar = 3:9:88)/second layer (Ni-$BZI_{55}$)/first layer ($BZI_{55}$)/fourth layer (BLF)/third layer (PBSCF)/supply gas on third layer side (volume ratio: $H_2O$:$O_2$:Ar = 3:19:78)) of the Comparative Example. As shown in Fig. 6A, the open circuit voltages (OCV) at 600°C and 500°C were 0.95 V and 0.99 V, respectively, which were only slightly lower than the ideal values of 0.97 V and 1.00 V calculated with the Nernst equation. In addition, the cells of the Comparative Example exhibited electrolysis current densities of 1.14 A/cm$^2$ and 0.56 A/cm$^2$ at 600°C and 500°C, respectively, at 1.3 V bias.

Fig. 6B shows a current-voltage (I-V) curve of the cell (supply gas on second layer (fuel electrode layer) side (volume ratio: $H_2O$:$H_2$:Ar = 0.0010:10:90)/second layer (Ni-$HBZI_{55}$)/first layer ((H)$BZI_{55}$)/fourth layer (BLF)/third layer (PBSCF)/supply gas on third layer side (volume ratio: $H_2O$:$O_2$:Ar = 3:19:78)) of the Example. The OCV at 600°C and 500°C were 0.93 V and 0.98 V, respectively, which were almost equivalent to those of the cell of the Comparative Example. Electrolysis current densities of the example cells at 600°C and 500°C were 1.68 A/cm$^2$ and 0.84 A/cm$^2$ at 1.3 V, respectively, which were higher values compared to the Comparative Example cell, which is a conventional proton conducting ceramic reversible cell.

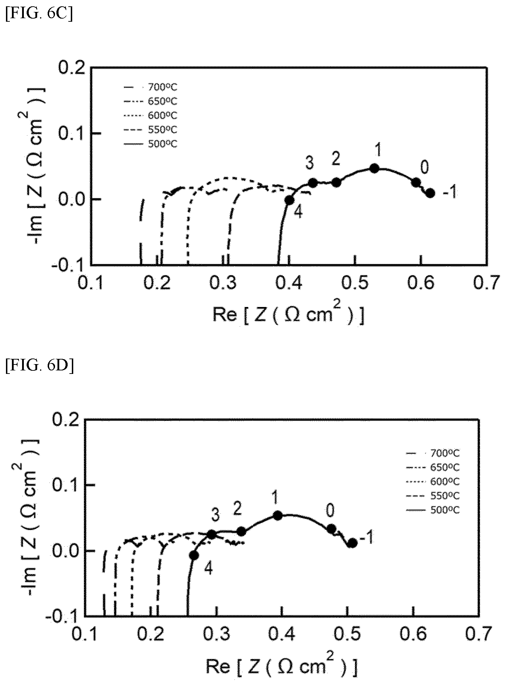

Fig. 6C shows an AC impedance spectrum of the Comparative Example cell measured under OCV conditions in a temperature range of 500°C to 700°C. The x-intercept on the high frequency side is attributed to the ohmic resistance (Ro) related to ion migration in the first layer (corresponding to the electrolyte layer), and the semicircle appearing thereafter is mainly attributed to the resistance due to the oxygen evolution reaction in the third layer (corresponding to the air electrode layer). The electrode resistance ($R_p$) is approximated from the diameter of the impedance arc. $R_O$ and $R_p$ of the cell of the comparative example at 500°C were 0.40 $\Omega$cm$^2$ and 0.21 $\Omega$cm$^2$, respectively.

Fig. 6D shows an AC impedance spectrum of the Example cell measured under OCV conditions in a temperature range of 500°C to 700°C. The $R_O$ of the cell of the Example at 500°C was 0.27 $\Omega$cm$^2$, which was lower than that of the cell of the Comparative Example. In addition, $R_p$ of the cell of the Example at 500°C was 0.23 $\Omega$cm$^2$, which was significantly close to $R_p$ (0.21 $\Omega$cm$^2$) of the cell of the Comparative Example. It has been found that the impedance arcs of the Example cell (Fig. 6D) and the Comparative Example cell (Fig. 6C) were in good agreement with each other, and no new arc was generated when a layer including $HBZI_{55}$ was used in the Example cell.

Then, constant current steam electrolysis of 600 mA/cm$^2$ was performed at 500°C, the exhaust gas on the second layer (corresponding to the fuel electrode layer) side was analyzed by gas chromatography, and the hydrogen evolution rate was quantified to evaluate the Faradaic efficiency (η).

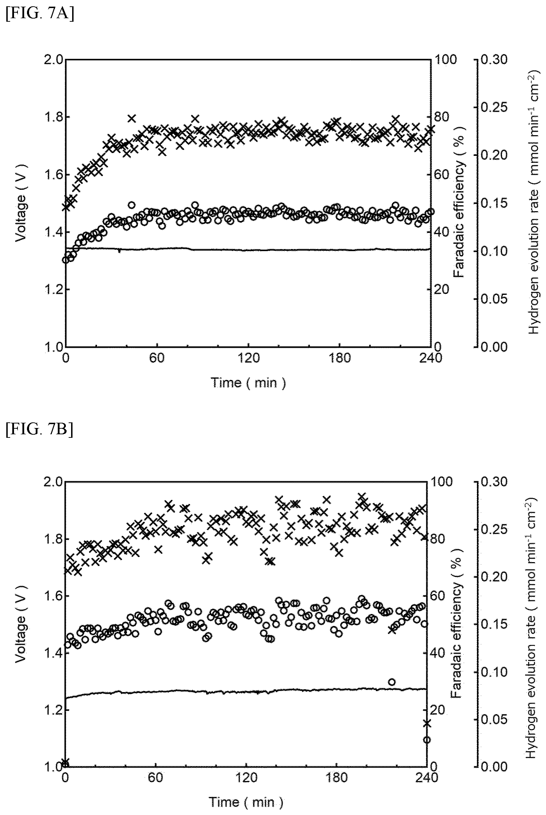

Fig. 7A shows transients of a cell voltage (polygonal line, left axis), a hydrogen evolution rate ($v_{meas}$) (round plot, right side of right axis), and a Faradaic efficiency (η) ($\times$ plot, left side of right axis) when constant current steam electrolysis is performed for 4 hours using a cell of the Comparative Example. As shown in Fig. 7A, the voltage of the cell (cell bias) of the Comparative Example was approximately 1.34 V, and the overvoltage defined by the gap between the cell bias and the OCV was calculated to be 0.35 V. In addition, the cell of the Comparative Example showed a $v_{meas}$ of approximately 1.4 $\times$ 10$^{-4}$ (mol·cm$^{-2}$·min$^{-1}$) and an η value of 73%.

Fig. 7B shows transients of a cell voltage (polygonal line, left axis), a hydrogen evolution rate ($v_{meas}$) (round plot, right side of right axis), and a Faradaic efficiency (η) ($\times$ plot, left side of right axis) when constant current steam electrolysis is performed for 4 hours using a cell of the Example. As shown in Fig. 7B, the voltage of the cell (cell bias) of the Example was approximately 1.26 V, and the overvoltage defined by the gap between the cell bias and the OCV was calculated to be 0.28 V. In addition, the cell of the Example showed a $v_{meas}$ of approximately $1.6 \times 10^{-4}$ (mol·cm$^{-2}$·min$^{-1}$) and an $\eta$ value of about 90%, and both greatly exceeded the results of the cell of the Comparative Example.

<Evaluation of ceramic reversible cell properties (2): fuel cell>

A mixed gas having a volume ratio of $O_2$/Ar = 20/80 was passed through water at 25°C at a total flow rate of 80 sccm to prepare a mixed gas including 3 vol% of $H_2O$ gas, and the mixed gas was supplied to the third layer (corresponding to the air electrode layer) side. In the case of the cell of the Example, the dried $H_2$/Ar mixed gas ($H_2O$ concentration: 10 ppm or less in a volume ratio, $H_2$ concentration: 10 vol%) was supplied to the second layer (corresponding to the fuel electrode layer) side. In the case of the cell of the Comparative Example, a humidified hydrogen/Ar mixed gas ($H_2O$ concentration: 3 vol%, $H_2$ concentration: 9 vol%) prepared by passing a mixed gas having a volume ratio of $H_2$/Ar = 10/90 through water at 25°C at a total flow rate of 80 sccm was supplied to the second layer side.

Electrochemical measurements were performed using a potentiostat/galvanostat with a frequency response analyzer (SP-300, Bio-Logic Science Instruments SAS).

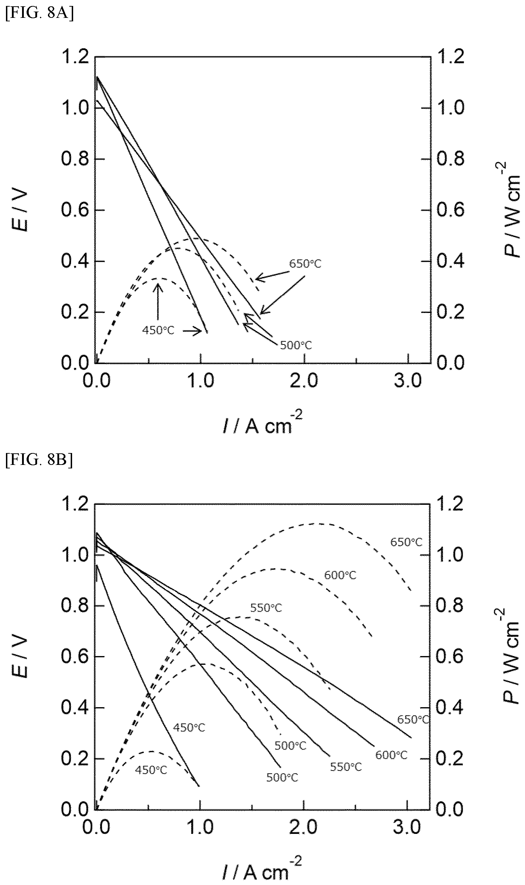

Fig. 8A shows a voltage (solid line, vertical left axis) and an output curve (dashed line, vertical right axis) with respect to a current (horizontal axis) of a cell of the Comparative Example. As shown in Fig. 8A, in the cell of the Comparative Example, the output did not increase although the temperature was increased at 550°C (not shown) to 650°C, the maximum output was approximately 0.5 W/cm$^2$, and the outputs at 600 and 500°C were 0.52 W/cm$^2$ and 0.45 W/cm$^2$, respectively.

Fig. 8B shows a voltage (solid line, vertical left axis) and an output curve (dashed line, vertical right axis) with respect to a current (horizontal axis) of a cell of the Example. As shown in Fig. 8B, the cell of the Example had an improved output as compared with the cell of the Comparative Example (Fig. 8A). In addition, in the cell of the Example, an improvement in output was observed with an increase in temperature, and the outputs at 500°C, 550°C, 600°C, and 650°C were 0.58 W/cm$^2$, 0.75 W/cm$^2$, 0.9 W/cm$^2$, and 1.08 W/cm$^2$, respectively.

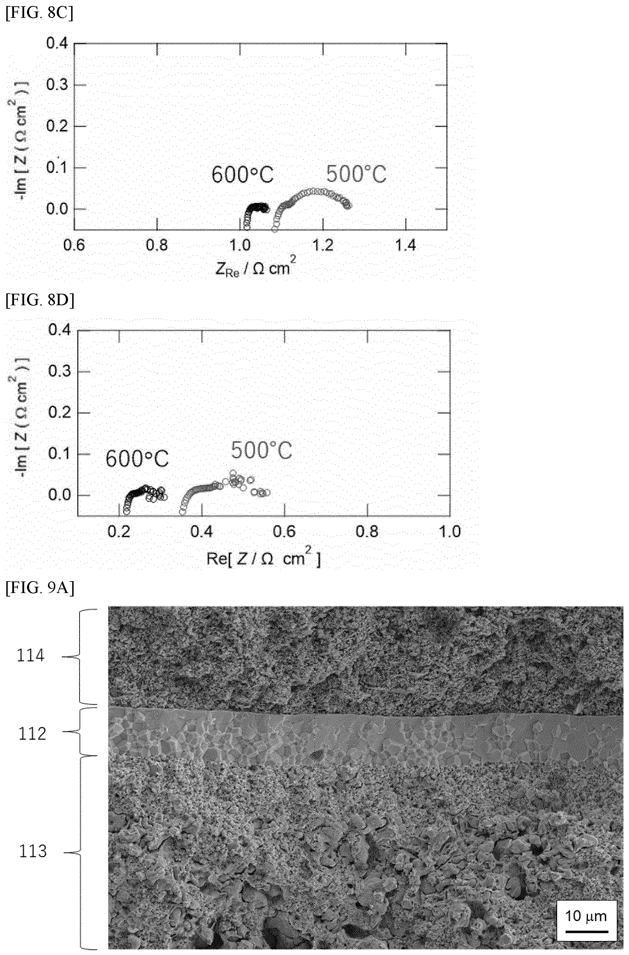

Fig. 8C shows the AC impedance spectra of the Comparative Example cell measured under OCV conditions at temperatures of 500°C and 600°C. As shown in Fig. 8C, for example, $R_O$ and $R_p$ of sample No. 2 at 500°C were 1.07 $\Omega$cm$^2$ and 0.18 $\Omega$cm$^2$, respectively.

Fig. 8D shows the AC impedance spectra of the Example cell measured under OCV conditions at temperatures of 500°C and 600°C. As shown in Fig. 8D, for example, $R_O$ and $R_p$ of sample No. 1 at 500°C were 0.35 $\Omega$cm$^2$ and 0.19 $\Omega$cm$^2$, respectively. In the cell of the Example (Fig. 8D), the ohmic resistance $R_O$ of the first layer (corresponding to the electrolyte layer) was greatly reduced as compared with the cell of the Comparative Example (Fig. 8C), and this is considered to cause the output to increase as compared with the Comparative Example.

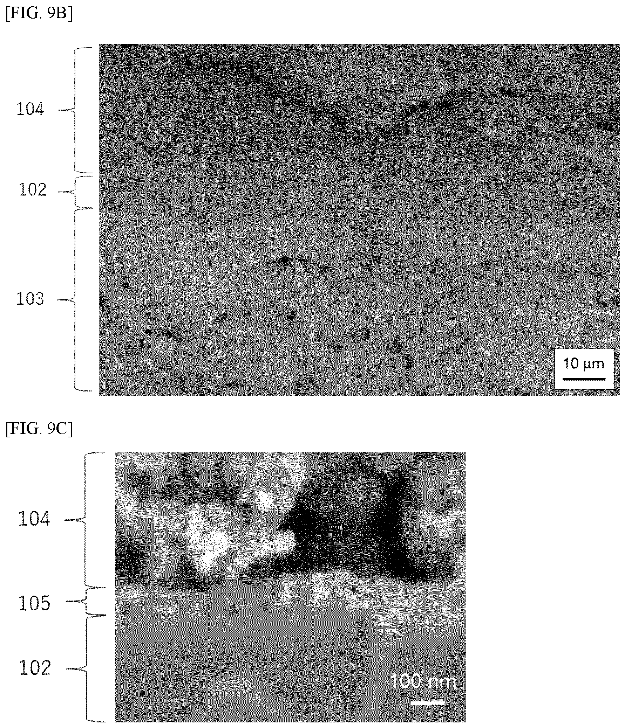

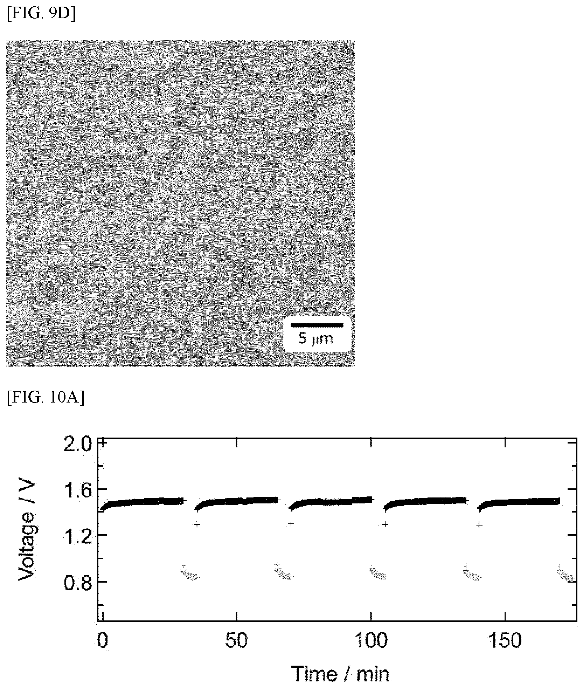

Fig. 9A shows a cross-sectional SEM image of the cell of the Comparative Example after the steam electrolysis measurement, and Fig. 9B shows a cross-sectional SEM image of the cell of the Example after the steam electrolysis measurement. From Figs. 9A and 9B, in both the cell of the Comparative Example and the cell of the Example, the porous second layer 103 (or 113) as the lowermost layer, the dense first layer 102 (or 112) formed thereon, and the porous third layer 104 (or 114) formed as the uppermost layer were observed. Fig. 9C is an enlarged cross-sectional SEM image of a space between the first layer and the third layer of the cell of the Example. As shown in Fig. 9C, a fourth layer (BLF) 105 was observed between the first layer 102 and the third layer 104. In addition, the third layer (PBSCF) 104 was composed of particles having a diameter of approximately 100 nm. Fig. 9D is an SEM image of the surface subjected to ultrasonic cleaning after the third layer of the cell of the Example was removed. The magnification is low in Fig. 9D, and thus the surface morphology of the first layer 102 below the thin fourth layer 105 is clearly shown. As can be seen from Fig. 9D, on the surface of the first layer 102 of the cell of the Example, particles having a diameter of several $\mu$m were densely bonded, and no pinhole or the like was observed.

<Evaluation of ceramic reversible cell properties (3): ammonia-producing co-electrolysis cell>

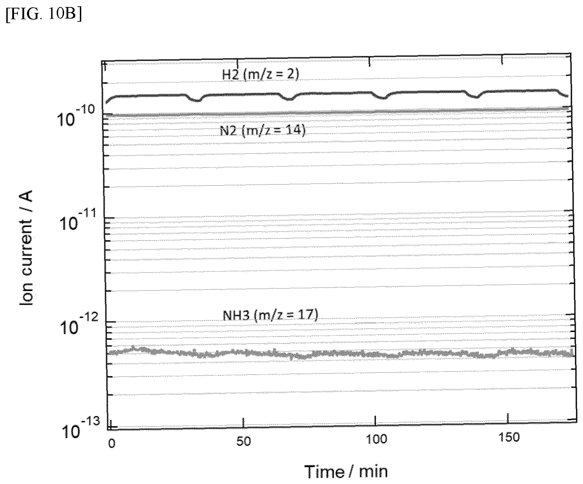

$N_2$-$H_2O$ co-electrolysis was performed by supplying 130 sccm of 30% humidified air ($H_2O$:$O_2$:Ar = 30:14:56 in a volume ratio) to the third layer (corresponding to the air electrode layer) side of the ceramic reversible cell of the Example, and supplying 30 sccm of a $H_2$/$N_2$ mixed gas ($H_2$:$N_2$= 1:9 in a volume ratio, $H_2O$ concentration: 10 ppm or less in a volume ratio) to the second layer (corresponding to the fuel electrode layer) side. During the electrolysis, the exhaust gas on the second layer side was measured with a mass spectrometer, and the amounts of $H_2$ (m/z = 2) and $NH_3$ (m/z = 17) generated were quantified. Fig. 10A shows voltage changes with time when a cycle of performing $H_2O$-$N_2$ co-electrolysis at 600°C for 30 minutes at 354 mA · cm$^{-2}$ constant current density and subsequently holding at an open circuit voltage (OCV) for 5 minutes for $NH_3$ desorption is repeated 5 times, and Fig. 10B shows signal intensity changes of $H_2$, $N_2$, and $NH_3$ in the mass spectrum in this case. When a constant current was applied, the signal intensity of $H_2$ and $NH_3$ increased, confirming electrochemical ammonia synthesis by $N_2$-$H_2O$ co-electrolysis. The Faradaic efficiency and evolution rate of $H_2$ and $NH_3$

were determined from the resulting peak areas and summarized in Table 7.

[Table 7]

| | Evolution rate/$10^{-6}$ mol cm$^{-2}$ s$^{-1}$ | Faradaic efficiency/% |
|---|---|---|
| $H_2$ | 1.6 | 89 |
| $NH_3$ | 0.088 | 7.2 |

As shown in Table 7, the Faradaic efficiency of $NH_3$ was as relatively high as approximately 7%.

Example 2

In Example 2, in order to clarify the features of the electrolyte layer, a sample having a relatively thick electrolyte layer was fabricated, and the properties thereof were evaluated.

A dense sintered body of a perovskite-type metal oxide (and/or a hydrate thereof and/or a hydride thereof) was fabricated as an electrolyte layer in the same manner as in Example 1. Specifically, $BaCO_3$ (Kojundo Chemical Lab. Co., Ltd.), $In_2O_3$ (KANTO CHEMICAL CO., INC.), and $ZrO_2$ (Kojundo Chemical Lab. Co., Ltd.) were mixed in a ball mill at a predetermined ratio, heated at 900°C for 6 hours, ball milled again, and then further heated at 1300°C for 8 hours. The mixture was subjected to ball mill grinding again, then molded by uniaxial pressing and isostatic pressing, and heated at 1500°C for 8 hours to obtain an electrolyte layer (approximately 1.2 mm thick).

A Pt layer as a fuel electrode layer was formed on one surface of the electrolyte layer by applying a commercially available Pt paste (TANAKA PRECIOUS METAL TECHNOLOGIES Co., Ltd.), which was then sintered at 900°C for one hour.

A PBSCF layer was formed as an air electrode layer on the other surface of the electrolyte layer in the same manner as in Example 1.

Finally, baking was performed at 800°C to obtain a ceramic reversible cell of a layer configuration before dry hydrogen treatment (fuel electrode layer (Pt)/electrolyte layer ($BZI_{55}$)/air electrode layer (PBSCF, approximately 100 $\mu$m)).

In addition to the dry hydrogen treatment in which heavy water humidified air ($D_2O$:$O_2$:Ar = 7:19:74 in a volume ratio) was supplied to the air electrode layer side of the ceramic reversible cell and dried $H_2$ ($H_2O$ concentration: 10 ppm or less in a volume ratio, the balance being $H_2$) was supplied to the fuel electrode layer side so as to introduce hydride ions into the $BZI_{55}$ of the electrolyte layer, heating was performed at 800°C for 24 hours while performing steam electrolysis by applying voltages of OCV (approximately 0.9 V, sample No. 13), 1.3 V (sample No. 12) and 1.5 V (sample No. 11) between both electrodes.

In contrast, as a Comparative Example in which hydride ions were not introduced, heavy water humidified air ($D_2O$:$O_2$:Ar = 7:19:74 in a volume ratio) was supplied to the air electrode layer side of the ceramic reversible cell, and humidified $H_2$ ($H_2O$:$H_2$ = 3:97 in a volume ratio) was supplied to the fuel electrode layer side, and heating was performed at 800°C for 24 hours (sample No. 14).

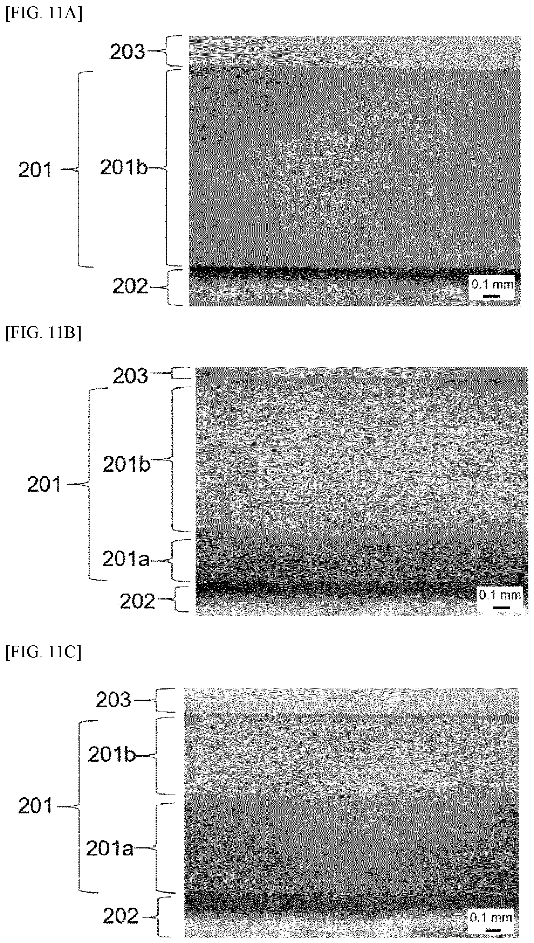

Fig. 11A shows an optical microscope image of a side surface of sample No. 14 (steam electrolysis without dry hydrogen treatment at OCV). As shown in Fig. 11A, it is found that hydride ions were not introduced into the electrolyte layer 201 between the fuel electrode layer 202 and the air electrode layer 203, and the electrolyte layer was a uniform layer (that is, the proton conducting $BZI_{55}$ layer 201b). This is considered to be because as shown in the above formula (F4), steam was supplied to both electrode sides of the cell, and thus the electrolyte layer was uniformly hydrated, and the proton conducting $BZI_{55}$ layer was maintained as a whole.

Fig. 11B shows an optical microscope image of a side surface of sample No. 13 (steam electrolysis with dry hydrogen treatment at OCV). As shown in Fig. 11B, as a result of introducing hydride ions due to oxygen deficiency on the fuel electrode layer 202 side of the electrolyte layer 201, a $BZI_{55}$ layer (that is, the hydride ion conducting $HBZI_{55}$ layer 201a, 0.2 mm thick) into which black (dark) hydride ions were introduced was confirmed as compared with the proton conducting $BZI_{55}$ layer 201b.

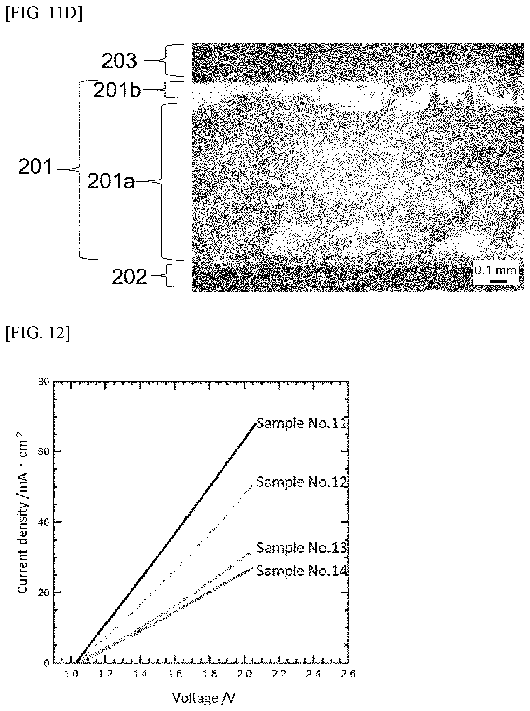

Fig. 11 C shows an optical microscope image of the side surface of sample No. 12 (with dry hydrogen treatment, steam electrolysis at 1.3 V), and Fig. 11D shows an optical microscope image of the side surface of sample No. 11 (with dry hydrogen treatment, steam electrolysis at 1.5 V). As shown in Figs. 11B to 11D, when the applied voltage was increased, the thicknesses of the $HBZI_{55}$ layer 201a in the electrolyte layer 201 were increased to 0.2 mm (sample No. 13), 0.6 mm (sample No. 12), and 1 mm (sample No. 11). In addition, as shown in Fig. 11D, although the applied voltage was large, heavy water humidified air had been supplied to the air electrode layer 203 side, and thus the proton conducting $BZI_{55}$ layer 201b remained on the air electrode layer 203 side. In these cases, it is considered that as compared with the sample No. 14, pure hydrogen was supplied without supplying steam to the fuel electrode layer 202 side, and thus the hydrogenation reaction of the above formula (F2) occurred, and the $BZI_{55}$ layer 201b on the fuel electrode layer 202 side was transferred to the $HBZI_{55}$ layer 201a. When the applied voltage is further increased, the apparent hydrogen partial pressure $p_{H2}$ on the fuel electrode side increases according to the following formula (F10) (Nernst equation). As a result, it is considered that in the electrolyte layer 201, a high $p_{H2}$ partial pressure region where the $HBZI_{55}$ phase is preferentially generated over a wide range from the fuel electrode layer 202 side was maintained.

$$E = E^0 + RT/F \ln(p_{H2}^{anode}/p_{H2}^{cathode}) \cdots (F10)$$

Herein, R is a gas constant, T is a temperature, F is a Faraday constant, a $p_{H2}^{anode}$ is a hydrogen partial pressure on the air electrode layer 203 side, and a $p_{H2}^{cathode}$ is a hydrogen partial pressure on the fuel electrode layer 202 side.

For the cell of sample Nos. 11 to 13 of the Examples, heavy water humidified air ($D_2O:O_2:Ar = 7:20:80$ in a volume ratio) was supplied to the air electrode layer side, and dried $H_2$ ($H_2O$ concentration: 10 ppm or less in a volume ratio, the balance being $H_2$) was supplied to the fuel electrode layer side, and steam electrolysis was performed at 700°C.

For the cell of sample No. 14 of the Comparative Example, heavy water humidified air ($D_2O:O_2:Ar = 7:19:74$ in a volume ratio) was supplied to the air electrode layer side, and humidified $H_2$ ($H_2O:H_2 = 3:97$ in a volume ratio) was supplied to the fuel electrode layer side, and steam electrolysis was performed at 700°C.

Fig. 12 shows electrolysis current-voltage curves of the ceramic reversible cells of sample Nos. 11 to 14.

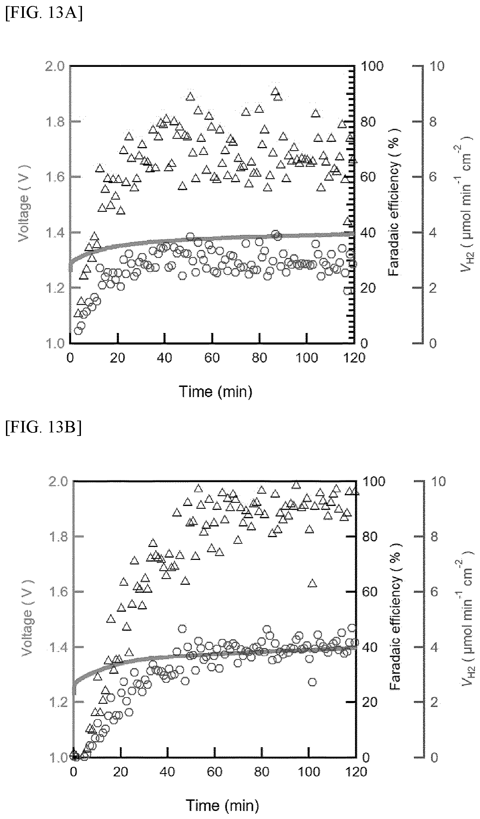

The sample No. 14 exhibited a relatively small electrolysis current of 10 mAcm$^{-2}$ at 1.5 V. The Faradaic efficiency (shown as a triangular plot) determined by constant current electrolysis at 10 mAcm$^{-2}$ was a relatively low value of approximately 75% (Fig. 13A). In contrast, sample Nos. 11 to 13 exhibited higher electrolytic performance than sample No. 14. In addition, sample No. 12 had 23 mAcm$^{-2}$ at 1.5 V, and the Faradaic efficiency determined by constant current electrolysis at 20 mAcm$^{-2}$ (indicated by a triangular plot) was 90% or more (Fig. 13B). In Figs. 13A and 13B, a solid line indicates a voltage change, and a circle plot indicates a hydrogen evolution rate ($V_{H2}$).

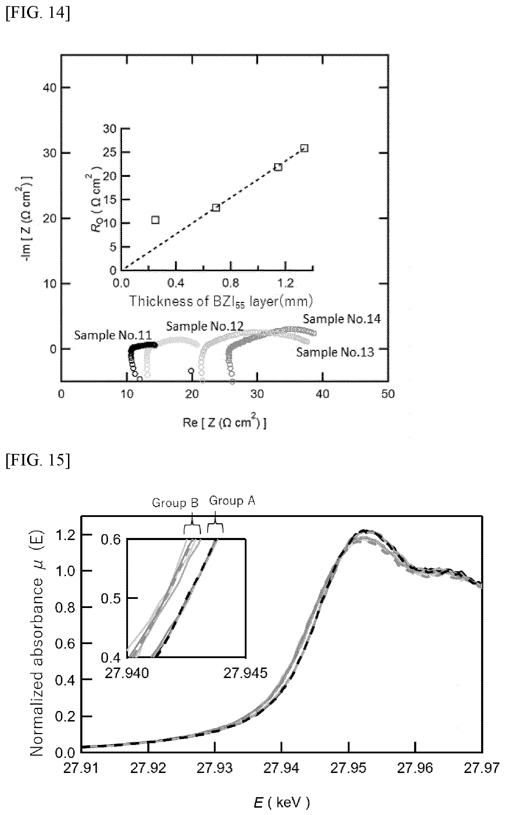

Fig. 14 shows the AC impedance spectrum of the cells of Sample Nos. 11 to 14, and a graph of the ohmic resistance (Ro) with respect to the thickness of the $BZI_{55}$ layer is shown on the upper side of the figure. As shown on the upper side in the figure, it has been confirmed that the ohmic resistance linearly decreases as the thickness of the $BZI_{55}$ layer decreases (that is, the thickness of the $HBZI_{55}$ layer increases). This indicates that the H$^-$ ion conductivity of the $HBZI_{55}$ layer is higher than the H$^+$ ion conductivity of the $BZI_{55}$ layer.

Then, in order to confirm that the blackened layers of sample Nos. 11 to 13 were $HBZI_{55}$ layers, In K-edge μ-XAFS measurement was performed by a synchrotron X-ray microprobe. As a comparison, the $HBZI_{55}$ layer and the $BZI_{55}$ layer of Example 1 were also measured.

As an example, the measurement result of sample No. 12 ($HBZI_{55}$ layer thickness: approximately 0.6 mm) is shown in Fig. 15, and an enlarged view around normalized absorbance = 0.5 is shown as an inset. As shown by Group A in Fig. 15, when measurement was performed at positions of 0.18 mm, 0.33 mm, and 0.48 mm from the air electrode layer side toward the fuel electrode layer side (that is, when measurement was performed in a non-blackened layer), the normalized absorbance = 0.5 was achieved on the relatively high energy side, which was consistent with the spectrum (dashed line) of the $BZI_{55}$ layer of Example 1. In contrast, as shown by Group B in Fig. 15, when the measurement was performed at positions of 0.63 mm, 0.78 mm, 0.93 mm, and 1.08 mm from the air electrode layer side toward the fuel electrode layer side (that is, when the measurement was performed in the blackened layer), the position where the normalized absorbance = 0.5 was achieved was shifted to the low energy side, which coincided with the spectrum (dashed line) of the $HBZI_{55}$ layer of Example 1 (however, a case of the measurement at a position of 0.63 mm indicated the shift slightly on the high energy side). This indicates changes to the $BZI_{55}$ phase and the $HBZI_{55}$ phase with the depth as a boundary because the hydrogen chemical potential rapidly decreases at a certain point in the electrolyte layer.

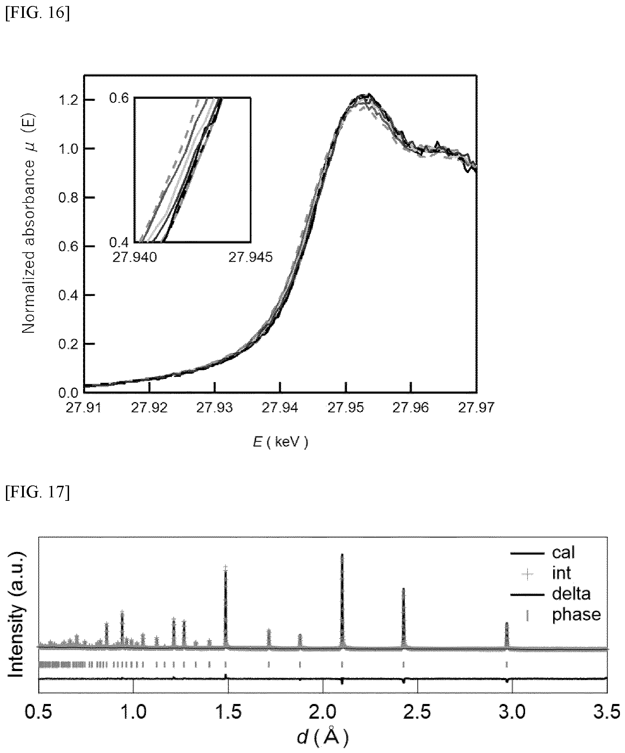

Fig. 16 shows results of performing In-K edge μ-XAFS measurement at positions of 0.48 mm, 0.51 mm, 0.57 mm, 0.60 mm, and 0.63 mm from the air electrode layer side toward the fuel electrode layer side of sample No. 12, and an enlarged view around normalized absorbance = 0.5 is shown as an inset. As shown in the inset of Fig. 16, the spectra measured at positions of 0.51 mm, 0.57 mm, 0.60 mm, and 0.63 mm from the air electrode layer side toward the fuel electrode layer side were present between the spectrum of the $BZI_{55}$ layer (dashed line on the high energy side) and the spectrum of the $HBZI_{55}$ layer (dashed line on the low energy side) in this order in Example 1. It is considered that a layer in which the $BZI_{55}$ phase and the $HBZI_{55}$ phase are mixed is formed at positions of 0.51 mm, 0.57 mm, 0.60 mm, and 0.63 mm from the air electrode layer side toward the fuel electrode layer side.

Further, in order to confirm that the blackened layers of sample Nos. 11 to 13 were $HBZI_{55}$ layers, an NRD pattern was obtained. As an example, a sample obtained by removing a non-blackened layer ($BZI_{55}$ layer) of sample No. 12 by polishing was used. Fig. 17 shows an NRD pattern and a Rietveld calculated profile of a blackened layer of Sample No. 12. Structural parameters and compositions determined by NRD Rietveld analysis are shown in Table 8.

[Table 8]

| Blackened layer of sample No. 12 | | | | |
|---|---|---|---|---|
| Lattice site | Position | Occupancy | S(%) | 1.32 |
| Ba(1a) | (1/2, 1/2, 1/2) | 1 | Rwp(%) | 3.87 |
| Zr(1b) | (0, 0, 0) | 0.5 | Rp(%) | 3.51 |
| In(1b) | (0, 0, 0) | 0.5 | Lattice constant a (Å) | 4.1990 |
| O(3e) | (1/2, 0, 0) | 0.753 | Composition | $BaZr_{0.5}In_{0.5}O_{2.26} (D_o)_{0.29}(D_{fcc})_{0.16}$ |
| $D(D_o)$ | (1/2, 0, 0) | 0.0962 | | |
| $D(D_{fcc})$ | (1/2, 1/2, 0) | 0.0536 | | |

The following can be seen from Table 8. The Rwp value and the s value were sufficiently small, and structure refinement was performed with high accuracy. From the analysis, the composition of the blackened layer of sample No. 12 was determined to be $BaZr_{0.5}In_{0.5}O_{2.26}D_{0.45}$, and satisfies the above formula (1) similarly to Sample 1, and as a result of bringing the sample into an equilibrium state by bringing dry hydrogen having a water content of 20 ppm or less in a volume ratio into contact with the sample at 500°C to 900°C, the left side of the above formula (2) was 0.45, indicating that the above formula (2) was satisfied, and hydride ions were introduced. In addition, for the blackened layer of sample No. 12, [O]/[A] in the above formula (3) was 2.26, indicating that the formula (3) was satisfied, which was a preferable result.

This application claims priority based on Japanese Patent Application No.2023-041188 filed on March 15, 2023. Japanese Patent Application No.2023-041188 is incorporated herein by reference.

DESCRIPTION OF REFERENCE NUMERALS

1 Cell according to the embodiments
2 Layer including perovskite-type metal oxide or the like according to the embodiments
3 Fuel electrode
4 Air electrode
11 Conventional cell
12 Electrolyte layer
13 Fuel electrode
14 Air electrode
102 First layer of cell of Example
103 Second layer of cell of Example
104 Third layer of cell of Example
105 Fourth layer of cell of Example
112 First layer of cell of Comparative Example
113 Second layer of cell of Comparative Example
114 Third layer of cell of Comparative Example
201 Electrolyte layer
201a Hydride ion conducting $HBZI_{55}$ layer
201b Proton conducting $BZI_{55}$ layer
202 Fuel electrode layer
203 Air electrode layer

**Claims**

1. A ceramic reversible cell comprising any one or more selected from the group consisting of a perovskite-type metal oxide, a hydrate of the perovskite-type metal oxide and a hydride of the perovskite-type metal oxide, wherein the any one or more selected from the group consisting of the perovskite-type metal oxide, the hydrate of the perovskite-type metal oxide and the hydride of the perovskite-type metal oxide:

comprise A (A being any one or more selected from the group consisting of Ba, Sr and Ca), B (B being any one or more selected from the group consisting of Zr, Sn, Ce, Ti and Hf) and M (M being any one or more selected from the group consisting of In, Fe, Cr and Mn) as main metal atoms, and
satisfy following formula (1) and comprise hydride ions when brought into an equilibrium state by contact with dry hydrogen having a water content of 20 ppm or less in a volume ratio at 500°C to 900°C,

$$[A] : [B] : [M] = 1 : a\,(1 - x) : ax \cdots (1)$$

wherein [A], [B] and [M] respectively represent contents of A, B and M in mol%, and relationships of $0.90 \leq a \leq 1.10$ and $0.3 \leq x < 1.0$ are satisfied.

2. The ceramic reversible cell according to claim 1, wherein any one or more selected from the group consisting of the perovskite-type metal oxide, the hydrate of the perovskite-type metal oxide and the hydride of the perovskite-type metal oxide has a layer comprising hydride ions in a region on a fuel electrode side and does not have the layer comprising hydride ions in a region on an air electrode side with respect to the layer comprising hydride ions.

3. The ceramic reversible cell according to claim 1 or 2, wherein any one or more selected from the group consisting of the perovskite-type metal oxide, the hydrate of the perovskite-type metal oxide and the hydride of the perovskite-type metal oxide further satisfies the following formula (3) when brought into an equilibrium state by contact with dry hydrogen having a water content of 20 ppm or less in a volume ratio at 500°C to 900°C,

$$1.5 < [O]/[A] \leq 2.30 \cdots (3)$$

wherein [O] represents a content in mol% of oxygen atoms present at an oxygen position of the perovskite structure obtained from a Rietveld analysis result of a neutron diffraction pattern.

4. The ceramic reversible cell according to any one of claims 1 to 3, comprising:

a first layer comprising at least one selected from the group consisting of the perovskite-type metal oxide, a hydrate of the perovskite-type metal oxide and a hydride of the perovskite-type metal oxide; and
a second layer comprising at least one selected from the group consisting of the perovskite-type metal oxide, the hydrate of the perovskite-type metal oxide and the hydride of the perovskite-type metal oxide, and comprising at least one selected from the group consisting of Ni, Fe, Co, Pd, Cu and Ru.

5. The ceramic reversible cell according to claim 4, having the second layer, the first layer and a third layer comprising a conductive oxide in this order.

6. A steam electrolysis cell comprising the ceramic reversible cell according to any one of claims 1 to 5.

7. A fuel cell comprising the ceramic reversible cell according to any one of claims 1 to 5.

8. An ammonia-producing co-electrolysis cell comprising the ceramic reversible cell according to any one of claims 1 to 5.

[FIG. 1A]

[FIG. 1B]

[FIG. 1C]

[FIG. 2A]

[FIG. 2B]

[FIG. 2C]

[FIG. 3A]

[FIG. 3B]

[FIG. 3C]

[FIG. 3D]

[FIG. 4A]

[FIG. 4B]

[FIG. 4C]

[FIG. 4D]

[FIG. 4E]

[FIG. 4F]

[FIG. 5]

[FIG. 6A]

[FIG. 6B]

[FIG. 6C]

[FIG. 6D]

[FIG. 7A]

[FIG. 7B]

[FIG. 8A]

[FIG. 8B]

[FIG. 8C]

[FIG. 8D]

[FIG. 9A]

[FIG. 9B]

[FIG. 9C]

[FIG. 9D]

[FIG. 10A]

[FIG. 10B]

[FIG. 11A]

[FIG. 11B]

[FIG. 11C]

[FIG. 11D]

[FIG. 12]

[FIG. 13A]

[FIG. 13B]

[FIG. 14]

[FIG. 15]

[FIG. 16]

[FIG. 17]

# EP 4 682 297 A1

## INTERNATIONAL SEARCH REPORT

| | International application No. |
|---|---|
| | **PCT/JP2024/010102** |

**A. CLASSIFICATION OF SUBJECT MATTER**

*C25B 13/07*(2021.01)i; *C01G 25/02*(2006.01)i; *C04B 35/50*(2006.01)i; *C04B 35/488*(2006.01)i; *C25B 1/042*(2021.01)i; *C25B 9/00*(2021.01)i; *C25B 9/23*(2021.01)i; *C25B 13/04*(2021.01)i; *H01M 8/12*(2016.01)i; *H01M 8/1246*(2016.01)i
FI:   C25B13/07; C01G25/02; C04B35/488; C04B35/50; H01M8/12 101; H01M8/1246; C25B9/00 A; C25B13/04 301; C25B9/23; C25B1/042

According to International Patent Classification (IPC) or to both national classification and IPC

**B. FIELDS SEARCHED**

Minimum documentation searched (classification system followed by classification symbols)

C25B13/07; C01G25/02; C04B35/50; C04B35/488; C25B1/042; C25B9/00; C25B9/23; C25B13/04; H01M8/12; H01M8/1246

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/107194 A1 (KYOTO UNIVERSITY) 06 June 2019 (2019-06-06)<br>claims, paragraphs [0014]-[0028], [0064]-[0071] | 1-8 |
| Y | WO 2022/191111 A1 (NATIONAL UNIVERSITY CORPORATION HOKKAIDO UNIVERSITY) 15 September 2022 (2022-09-15)<br>claims, paragraphs [0068]-[0112], [0158]-[0162], fig. 14 | 1-8 |
| Y | TORIUMI, Hajime et al. Barium Indate-Zirconate Perovskite Oxyhydride with Enhanced Hydride Ion/Electron Mixed Conductivity. CHEMISTRY OF MATERIALS. 15 August 2022, vol. 34, no. 16, pp. 7389-7401<br>p. 7389, left column, lines 1-3, p. 7390, left column, lines 5-20 | 3-8 |

☐ Further documents are listed in the continuation of Box C.   ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| | International application No. |
|---|---|
| | **PCT/JP2024/010102** |

| Patent document cited in search report | Publication date (day/month/year) | Patent family member(s) | Publication date (day/month/year) |
|---|---|---|---|
| WO 2019/107194 A1 | 06 June 2019 | US 2021/0005916 A1 claims, paragraphs [0033]-[0056], [0092]-[0106] EP 3719815 A1 CN 111418027 A | |
| WO 2022/191111 A1 | 15 September 2022 | US 2023/0227324 A1 claims, paragraphs [0199]-[0250], [0284]-[0288], fig. 14 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001307546 A

- JP 2023041188 A

**Non-patent literature cited in the description**

- Steam electrolysis by solid oxide electrolysis cells (SOECs) with proton-conducting oxides. *Chem. Soc. Rev.*, 2014, vol. 43, 8255-8270